# EUROPEAN PATENT APPLICATION

(11) **EP 1 351 155 A2**
(43) Date of publication of application: **08.10.2003**
(21) Application number: 03006599.9
(22) Date of filing: 24.03.2003
(51) Int. Cl.: G06F 17/24

(54) **Multi-media template file distribution and editing system**

(30) Priority: 25.03.2002 JP 2002082831; 29.01.2003 JP 2003020820
(71) Applicant: YAMAHA CORPORATION, Hamamatsu-shi, Shizuoka-ken 430-8650 (JP)
(72) Inventor: Takahashi, Hiroaki, Hamamatsu-shi, Shizuoka-ken, 430-8650 (JP); Nakayama, Kazunori, Hamamatsu-shi, Shizuoka-ken, 430-8650 (JP); Yamaura, Atsushi, Hamamatsu-shi, Shizuoka-ken, 430-8650 (JP); Fujishima, Takuya, Hamamatsu-shi, Shizuoka-ken, 430-8650 (JP); Noguchi, Akane, Hamamatsu-shi, Shizuoka-ken, 430-8650 (JP); Takahashi, Takuya, Hamamatsu-shi, Shizuoka-ken, 430-8650 (JP)
(74) Representative: Kehl, Günther, Dipl.-Phys.

(57) **Abstract**

A storage medium storing a multi-media template file is provided, according to which a user can be given a feeling of creative achievement through simple editing. operations, while still maintaining creative aims as a template. The storage medium has a multi-media template (MMT) file stored thereon. The MMT file is comprised of multi-media data, which is comprised of temporal/spatial arrangement data and media data such as images, musical tones and text, and editing operation setting data which is appended to the multi-media data in piece-to-piece correspondence to the multi-media data. The temporal/spatial arrangement data determines reproduction timing and a reproduction form for each piece of the media data. Each piece of the editing operation setting data determines whether or not subsequent editing can be carried out and permitted forms of this editing for a corresponding piece of the multi-media data.

## Description

### BACKGROUND OF THE INVENTION

### Field of the Invention

The present invention relates to a storage medium storing a multi-media template file comprised of various media data such as images, sound and text that can be reproduced through sounding, visible display and so on, a template file creating apparatus, a template file editing apparatus, a template file distributing server, a template file distributing system, a template file creating program, and a template file editing program.

### Description of the Related Art

Hitherto, multi-media data comprised of various media data such as images, sound and text (character string) that can be reproduced through sounding, visible display and so on has been provided, and has been used in various situations, for example mobile telephone incoming call melodies and screens, and electronic mail.

With regard to an apparatus for creating such multi-media data, for example art has been proposed in which a creator appends a character string to media data comprised of images and sound prepared by a server, and the multi-media data thus completed is stored on the server and then allowed to be accessed by a specified user (Japanese Laid-open Patent Publication (Kokai) No. 11-203217, Japanese Laid-open Patent Publication (Kokai) No. 2001-197553) (first and second prior art). Moreover, a service according to which original multi-media data can be created by overwriting a character string, a frame or the like onto an image that has been taken by a camera built into a portable information terminal apparatus, and then this multi-media data can be sent to another terminal apparatus is also known (third prior art).

However, with this first, second and third prior art, the created multi-media data is not intended to be processed, for example edited, by a user who has acquired the multi-media data, but rather for example the user can only access the multi-media data to view the same.

Moving on, apparatuses and services that have been made to be such that a certain degree of freedom is provided when a user uses created multi-media data are known. For example, in fourth prior art, data presentation procedures or forms are built into an apparatus as script, whereby the manner of data display can be changed in accordance with values inputted by a user. Moreover, a system is known according to which a program supplying site stores a plurality of types of contents having different natures to one another, and program files that determine the order of reproduction of the contents, and transmits the contents to a client where the contents can be reproduced (Japanese Laid-open Patent Publication (Kokai) No. 2001-36423) (fifth prior art). In this art, the client acquires a program file from the program supplying site, and then acquires the contents from the program supplying site in a reproduction order determined by the program file and carries out program reproduction.

However, with the fourth prior art, the user can only select one possible reproduction form, and cannot edit the multi-media data for fixing, saving, outputting and so on. Moreover, with the fifth prior art, the user can merely select the order of reproduction of the contents by acquiring a desired program file, and cannot modify or edit the contents themselves. Consequently, with the fourth and fifth prior art, the user cannot obtain a feeling of creative achievement of having created new multi-media data by modifying multi-media data or the like according to his/her own ideas.

In recent years in particular, multi-media data for which the reproduction timing, display position and so on for each piece of media data are determined in advance has started to have value as creative work. Moreover, it is anticipated that the utility value would be further increased if, to answer to the varying tastes of users, multi-media data are provided as a kind of template so as to leave room for a certain degree of artistic creation for users, whereby the users could be given a feeling of creative achievement.

Here, one can envisage a service according to which multi-media data is supplied, for example, in the form of a collection of raw material elements that can be freely edited, and the user is allowed to modify and combine the raw material elements as desired, whereby the user can create new multi-media data. However, in this case parts that form the basic core of the multi-media data may be changed, and hence there will be no guarantee of the creative aims on the side of the supplier of the multi-media data being maintained. Moreover, due to the degree of freedom to carry out modification being too great, there will be a drawback that the editing operation will not be easy for inexperienced users.

### SUMMARY OF THE INVENTION

It is an object of the present invention to provide a storage medium storing a multi-media template file, a template file creating apparatus, a template file editing apparatus, a template file distributing server, a template file distributing system, a template file creating program, and a template file editing program, according to which a user can be given a feeling of creative achievement through editing that can be carried out through simple editing operations, while still maintaining creative aims as a template.

To attain the above object, in a first aspect of the present invention, there is provided a storage medium storing a multi-media template file, the multi-media template file comprising multi-media data comprising at least one type of media data that can be reproduced, and sequence data that determines reproduction timing and a reproduction form for each piece of the media data, and editing operation setting data that is made to correspond piece by piece to the multi-media data, wherein each piece of the editing operation setting data determines whether or not editing can be carried out and permitted forms of editing for a corresponding piece of the multi-media data.

According to this configuration, the scope over which subsequent editing of the multi-media data can be carried out can be determined by, for example, forbidding modification of basic core parts of the multi-media data while permitting modification of other parts of the multi-media data. As a result, a user can be given a feeling of creative achievement through editing operations, while still maintaining creative aims as a template.

Preferably, the editing operation setting data determines media data to be changed and ways in which the media data to be changed can be changed.

Preferably, the editing operation setting data determines media data to be changed, by permitting changing of the sequence data, and permits changing of at least one of the reproduction timing and the reproduction form for the media data to be changed.

Preferably, the media data comprises a plurality of pieces of media data that are determined by the sequence data to be selectively reproduced in specific reproduction timing, and the editing operation setting data permits selection of a piece of media data to be actually reproduced in the specific reproduction timing out of the plurality of pieces of media data.

Preferably, the editing operation setting data permits a piece of alternative media data that is subsequently acquired to be assigned as a piece of the media data to be reproduced in specific reproduction timing determined by the sequence data.

Preferably, the editing operation setting data permits selection of whether or not a piece of the media data to be reproduced in specific reproduction timing determined by the sequence data is to be actually reproduced in the specific reproduction timing.

To attain the above object, in a second aspect of the present invention, there is provided a template file creating apparatus comprising a multi-media data acquiring device that acquires multi-media data comprising at least one type of media data that can be reproduced, and sequence data that determines reproduction timing and a reproduction form for each piece of the media data, a setting data creating device that creates editing operation setting data that determines whether or not editing can be carried out and permitted forms of editing for each piece of the multi-media data acquired by the multi-media data acquiring device, and a template file producing device that produces a multi-media template file comprising the acquired multi-media data and the editing operation setting data created by the setting data creating device, wherein the multi-media data and the editing operation setting data are made to correspond piece by piece to one another.

According to this configuration, the scope over which subsequent editing of the multi-media data can be carried out can be determined. As a result, a user can be given a feeling of creative achievement through editing operations, while still maintaining creative aims as a template.

To attain the above object, in a third aspect of the present invention, there is provided a template file editing apparatus comprising a template file acquiring device that acquires a multi-media template file comprising multi-media data, and editing operation setting data that determines whether or not editing can be carried out and permitted forms of editing for each piece of the multi-media data, the multi-media data and the editing operation setting data being made to correspond piece by piece to one another, and wherein the multi-media data comprises at least one type of media data that can be reproduced, and sequence data that determines reproduction timing and a reproduction form for each piece of the media data, a presenting device that presents editable contents information that indicates editable contents with regard to the multi-media data in the multi-media template file acquired by the template file acquiring device, in accordance with the editing operation setting data in the acquired multi-media template file, an editing operation receiving device that receives editing operations for the multi-media data, in accordance with the editable contents information presented by the presenting device, and a data modifying device that modifies the multi-media data in accordance with the editing operations received by the editing operation receiving device, within a scope permitted by the editing operation setting data.

According to this configuration, editable contents information that indicates editable contents with regard to the multi-media data in the acquired multi-media template file is presented in accordance with the editing operation setting data in the multi-media template file, editing operations for the multi-media data are received in accordance with the presented editable contents information, and the multi-media data is modified in accordance with the received editing operations within a scope permitted by the editing operation setting data. As a result, editing operations for the multi-media data can be permitted within a predetermined scope by, for example, forbidding modification of basic core parts of the multi-media data while clearly indicating contents that can be modified; a user can thus be given a feeling of creative achievement through editing that can be carried out through simple editing operations, while still maintaining creative aims as a template.

Preferably, the presenting device presents the editable contents information in an order according to the reproduction timing determined by the sequence data, and the editing operation receiving device receives the editing operations in the order of the presentation of the editable contents information by the presenting device.

Preferably, the sequence data has corresponding thereto numerical information that determines an order, the presenting device presents the editable contents information in the order determined by the numerical information, and the editing operation receiving device receives the editing operations in the order of the presentation of the editable contents information by the presenting device.

Preferably, the presenting device displays a list corresponding to the editable contents information, receives editing-targeted editable contents information using the displayed list, and displays the received editing-targeted editable contents information, and the editing operation receiving device receives the editing operations in accordance with the displayed editing-targeted editable contents information.

Preferably, the template file editing apparatus further comprises a reproduction device that reproduces the media data in the multi-media template file in the reproduction timing determined by the sequence data, when the editable contents information is presented by the presenting device, and wherein when the reproduction timing for a piece of the media data for which editing is permitted is reached, the presenting device presents the editable contents information relating to the piece of the media data for which editing is permitted and the reproduction device suspends the reproduction of the media data, the editing operation receiving device receives the editing operations in an order of the presentation of the editable contents information by the presenting device, the data modifying device carries out modification of the multi-media data in an order of the reception of the editing operations by the editing operation receiving device, and after the modification has been carried out by the data modifying device, the reproduction device restarts the suspended reproduction of the media data.

Preferably, the template file editing apparatus further comprises a presentation changing device which, when a plurality of pieces of editable contents information are presented in different timing to one another by the presenting device, changes presentation contents from a currently presented piece of editable contents information to another piece of editable contents information in accordance with a user's instruction.

Preferably, a form of presentation of the editable contents information by the presenting device can be selected from a plurality of preset forms.

Preferably, the multi-media template file includes a plurality of pieces of media data that are to be selectively reproduced in specific reproduction timing determined by the sequence data, and the data modifying device modifies the multi-media data by selecting a piece of media data to be actually reproduced in the specific reproduction timing from the plurality of pieces of media data.

Preferably, the template file editing apparatus further comprises an alternative media data acquiring device that acquires alternative media data, and wherein the data modifying device modifies the multi-media data by assigning a piece of the alternative media data acquired by the alternative media data acquiring device as a piece of the media data to be reproduced in specific reproduction timing determined by the sequence data.

Preferably, the data modifying device modifies the multi-media data by selecting, for a piece of media data to be reproduced in specific reproduction timing determined by the sequence data, whether or not to actually reproduce the piece of media data in the specific reproduction timing.

With the template file editing apparatus according to the third aspect, it is preferable to adopt a configuration that the multi-media data can be reproduced as a preview while being modified by the data modifying device. Moreover, with the template file editing apparatus according to the third aspect, it may be configured such that the editing processing is carried out on the side of a distributing server. In this case, it should be configured such that a terminal apparatus from which the editing operations can be inputted is connected to the distributing server for communication therewith, the presenting device presents the editable contents to the terminal apparatus, and the editing operation receiving device receives the editing operations by receiving commands from the terminal apparatus. Moreover, it may also be configured such that the template file editing apparatus according to the third aspect is also used as the template file creating apparatus according to the second aspect.

To attain the above object, in a fourth aspect of the present invention, there is provided a template file distributing server connected to at least one terminal apparatus for communication therewith, comprising a data distributing device that distributes, to the terminal apparatus, a multi-media template file comprising multi-media data, and editing operation setting data that determines whether or not editing can be carried out and permitted forms of editing for each piece of the multi-media data, the multi-media data and the editing operation setting data being made to correspond piece by piece to one another, wherein the multi-media data comprises at least one type of media data that can be reproduced, and sequence data that determines reproduction timing and a reproduction form for each piece of the media data.

According to this configuration, the scope over which subsequent editing of the multi-media data can be carried out can be determined, and as a result, a user can be given a feeling of creative achievement through editing operations, while still maintaining creative aims as a template. Note that that the terminal apparatus is, for example, the template file editing apparatus according to the third aspect.

To attain the above object, in a fifth aspect of the present invention, there is provided a template file distributing system comprising a template file distributing server, and a template file editing apparatus connected to the template file distributing server for communication therewith, wherein the template file distributing server comprises a data distributing device that distributes, to the template file editing apparatus, a multi-media template file comprising multi-media data, and editing operation setting data that determines whether or not editing can be carried out and permitted forms of editing for each piece of the multi-media data, the multi-media data and the editing operation setting data being made to correspond piece by piece to one another, and wherein the multi-media data comprises at least one type of media data that can be reproduced, and sequence data that determines reproduction timing and a reproduction form for each piece of the media data, and wherein the template file editing apparatus comprises a template file acquiring device that acquires a multi-media template file by receiving the multi-media template file distributed by the data distributing device of the template file distributing server a presenting device that presents editable contents information that indicates editable contents with regard to the multi-media data in the multi-media template file acquired by the template file acquiring device, in accordance with the editing operation setting data in the multi-media template file an editing operation receiving device that receives editing operations for the multi-media data, in accordance with the contents presented by the presenting device; and a data modifying device that modifies the multi-media data in accordance with the editing operations received by the editing operation receiving device, within a scope permitted by the editing operation setting data.

According to this configuration, editing operations for the multi-media data can be permitted within a predetermined scope, and as a result, a user can be given a feeling of creative achievement through editing that can be carried out through simple editing operations, while still maintaining creative aims as a template.

To attain the above object, in a sixth aspect of the present invention, there is provided a template file creating program executed by a computer, comprising a multi-media data acquiring module for acquiring multi-media data comprising at least one type of media data that can be reproduced, and sequence data that determines reproduction timing and a reproduction form for each piece of the media data, a setting data creating module for creating editing operation setting data that determines whether or not editing can be carried out and permitted forms of editing for each piece of the multi-media data acquired by the multi-media data acquiring module, and a template file producing module for producing a multi-media template file comprising the acquired multi-media data and the editing operation setting data created by the setting data creating module, the multi-media data and the editing operation setting data being made to correspond piece by piece to one another.

According to this configuration, the scope over which subsequent editing of the multi-media data can be carried out can be determined, and as a result, a user can be given a feeling of creative achievement through editing operations, while still maintaining creative aims as a template.

To attain the above object, in a seventh aspect of the present invention, there is provided a template file editing program ... executed by a computer, comprising a template file acquiring module for acquiring a multi-media template file comprising multi-media data, and editing operation setting data that determines whether or not editing can be carried out and permitted forms of editing for each piece of the multi-media data, the multi-media data and the editing operation setting data being made to correspond piece by piece to one another, and wherein the multi-media data comprises at least one type of media data that can be reproduced, and sequence data that determines reproduction timing and a reproduction form for each piece of the media data, a presenting module for presenting editable contents information that indicates editable contents with regard to the multi-media data in the multi-media template file acquired by the template file acquiring module, in accordance with the editing operation setting data in the multi-media template file, an editing operation receiving module for receiving editing operations for the multi-media data, in accordance with the editable contents information presented by the presenting module, and a data modifying module for modifying the multi-media data in accordance with the editing operations received by the editing operation receiving module, within a scope permitted by the editing operation setting data.

According to this configuration, editing operations for the multi-media data can be permitted within a predetermined scope, and as a result, a user can be given a feeling of creative achievement through editing that can be carried out through simple editing operations, while still maintaining creative aims as a template.

The "reproduction form" mentioned above is determined in accordance with the type of the media data, and may, for example, include elements such as the sound volume in the case of sound data, or the display position in the case of visible data such as image data or text data such as a character string.

Moreover, an eighth aspect or a ninth aspect of the present invention may also be constituted by a computer-readable storage medium storing the template file creating program or template file editing program described above.

The above and other objects, features and advantages of the invention will become more apparent from the following detailed description taken in conjunction with the accompanying drawings.

### BRIEF DESCRIPTION OF THE DRAWINGS

FIG. 1 is a block diagram showing the overall configuration of a template file distributing system according to an embodiment of the present invention;
FIG. 2 is a block diagram showing the internal configuration of a template creating apparatus appearing in FIG. 1;
FIG. 3 is a block diagram showing the internal configuration of a communication terminal apparatus appearing in FIG. 1;
FIG. 4 is a conceptual diagram showing the structure of an MMT file;
FIG. 5 is a flowchart of an MMT file producing process carried out by the template creating apparatus;
FIG. 6 is a flowchart of an MMT file editing process carried out by the communication terminal apparatus;
FIG. 7A is a view showing the layout of an operating part;
FIG. 7B is a view showing an example of a display screen on an image display part;
FIG. 8A is a diagram illustrating part of the data structure of each of a user library and the MMT file before the editing processing;
FIG. 8B is a conceptual diagram showing the editable contents of the multi-media data as determined by the editing operation setting data;
FIGS. 9A to 9C is a flowchart showing part of a specific example of the MMT file editing process;
FIGS. 10A to 10C are a flowchart of other parts of the specific example of the MMT file editing process; specifically:

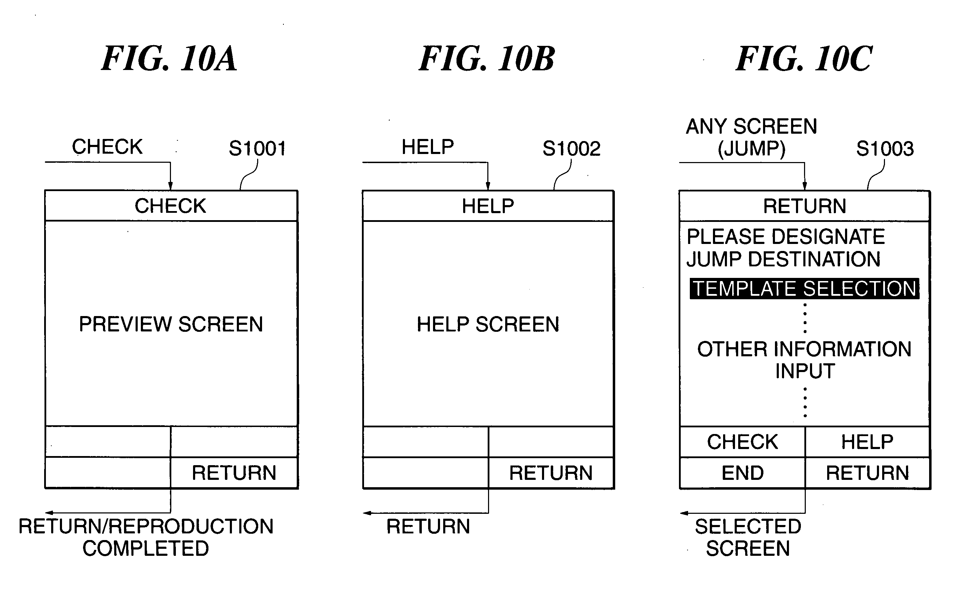

FIG. 10A is a view showing a display example of a preview reproduction screen;
FIG. 10B is a view showing a display example of a help screen; and
FIG. 10C is a view showing a display example of a jump destination selection screen;

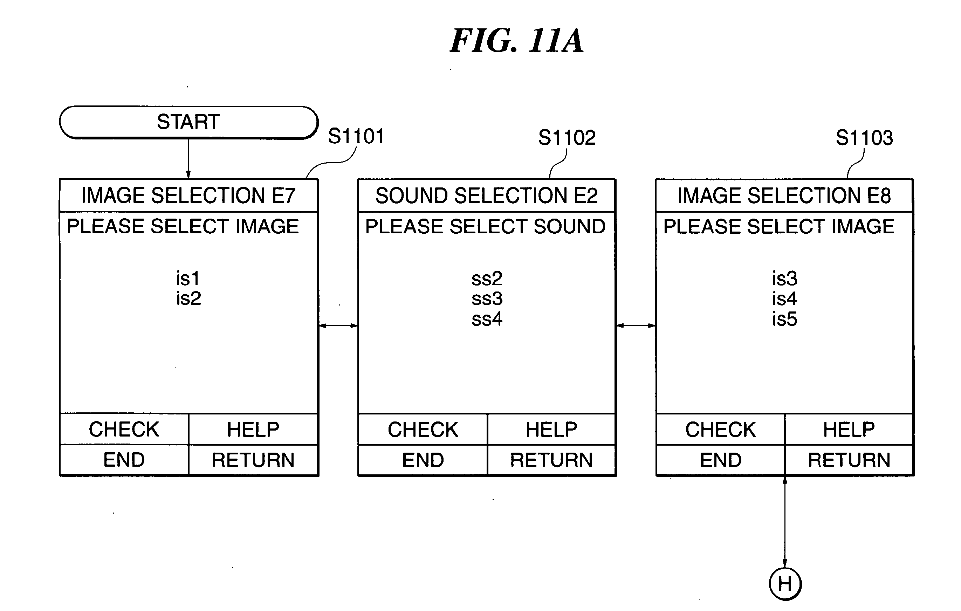

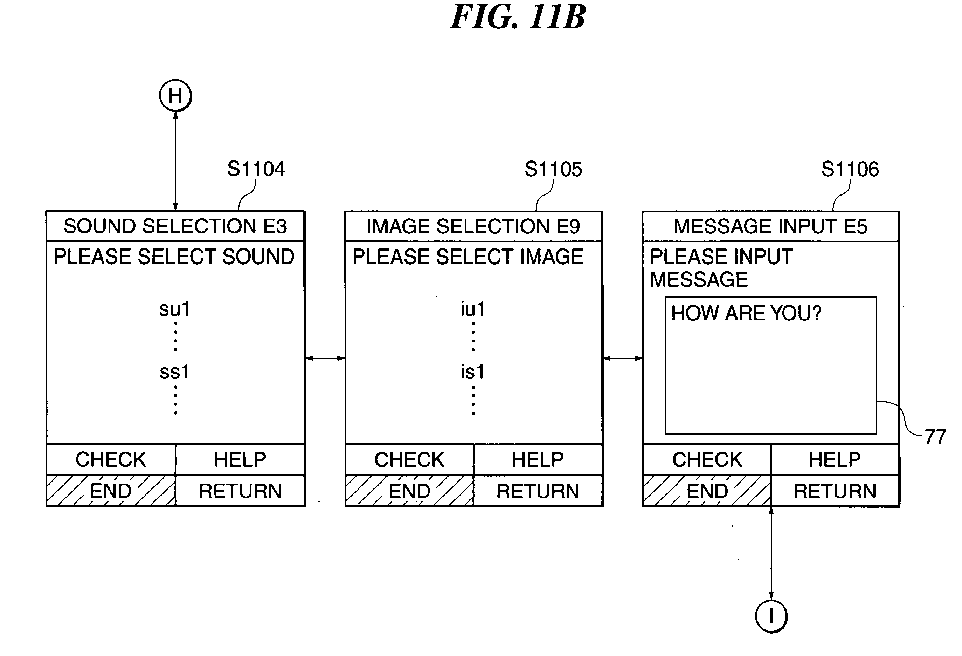

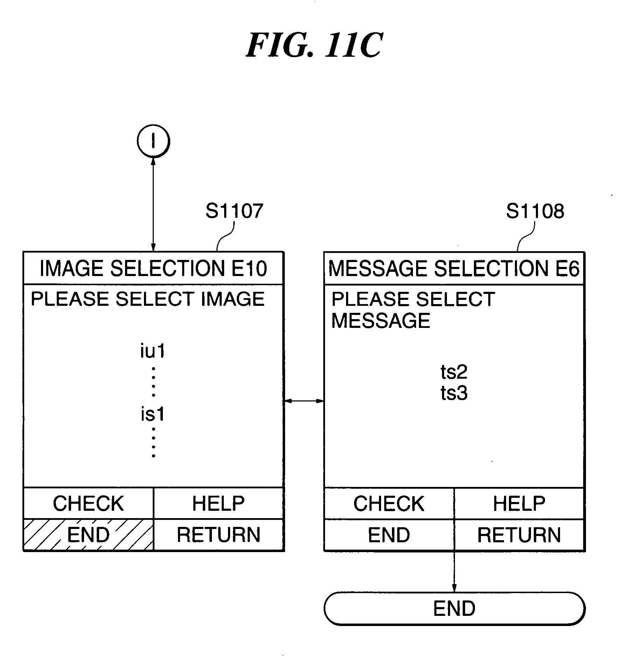

FIG. 11 is a flowchart of a time series editing process;

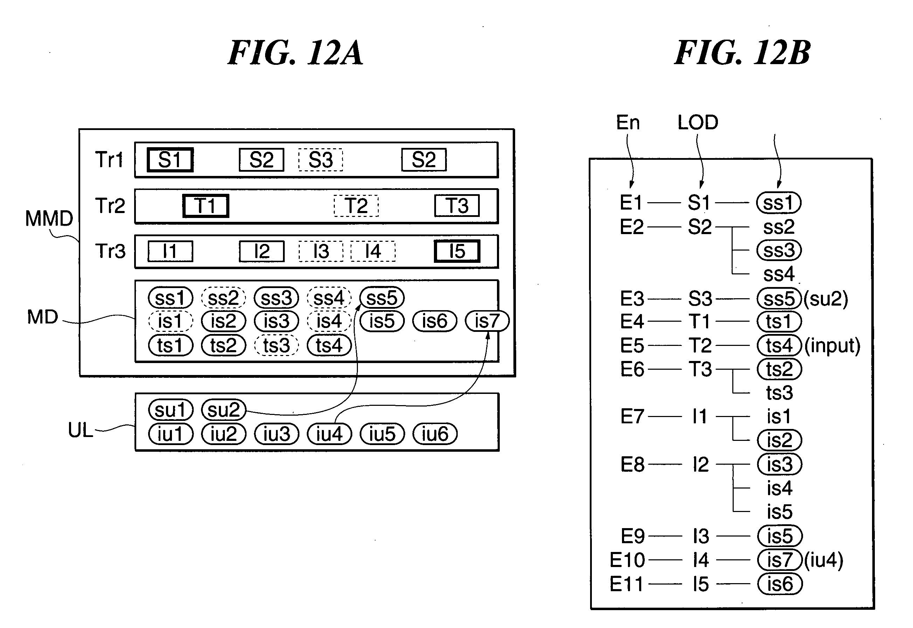

FIG. 12A is a diagram illustrating part of the data structure of each of the user library and the MMT file after the editing processing;
FIG. 12B is a conceptual diagram showing the editable contents of the multi-media data after the editing processing as determined by the editing operation setting data;

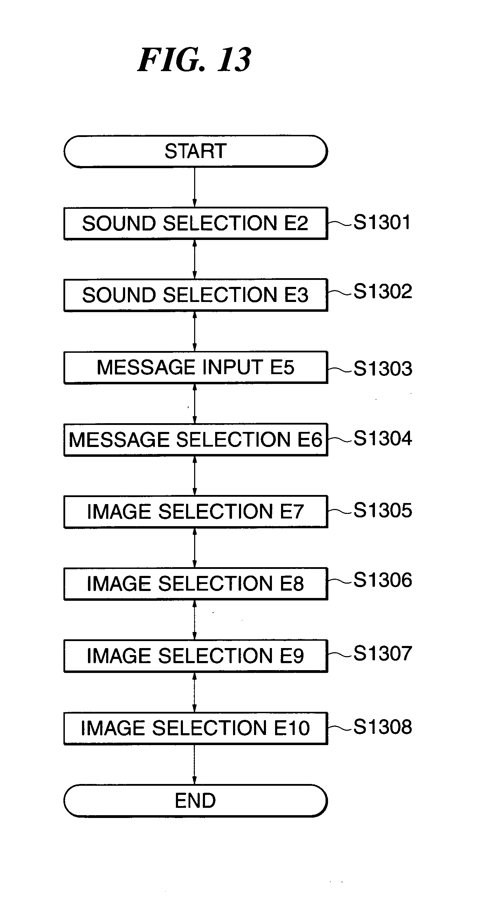

FIG. 13 is a flowchart of a numerical order editing process;

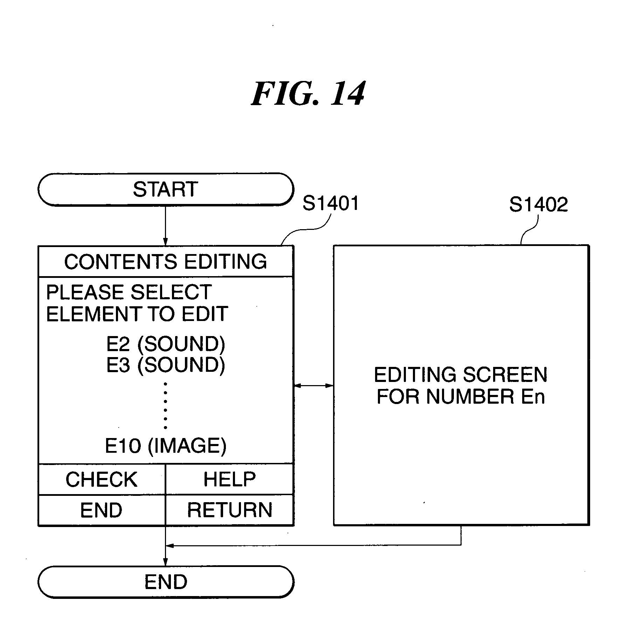

FIG. 14 is flowchart of a list display selection editing process; and

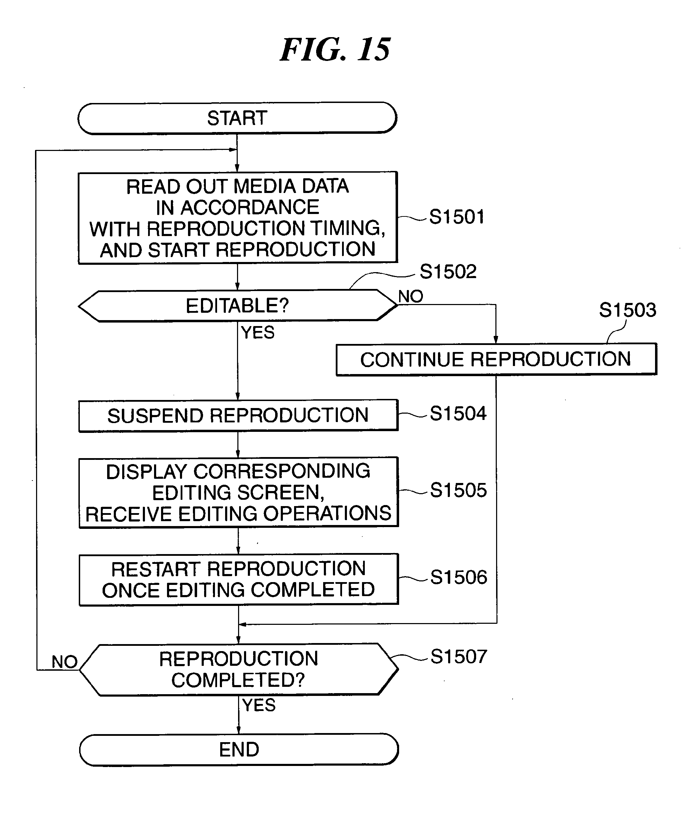

FIG. 15 is a flowchart of a reproduction-concurrent editing process.

### DETAILED DESCRIPTION OF THE PREFERRED EMBODIMENTS

The present invention will now be described with reference to the drawings showing a preferred embodiment thereof.

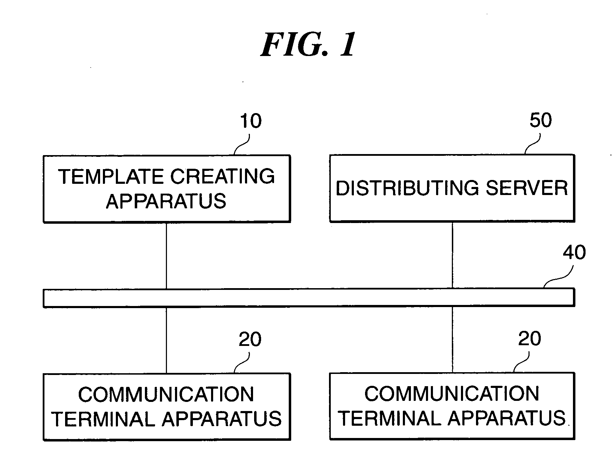

FIG. 1 is a block diagram showing the overall configuration of a template file distributing system according to an embodiment of the present invention. The system is configured such that a template creating apparatus 10 and two communication terminal apparatuses 20 (template file editing apparatuses) are connected to a distributing server 50 via a communication line 40, for example via the Internet, for data communication with each other. It should be noted that a plurality of template creating apparatuses having a similar configuration to that of the illustrated template creating apparatus 10 and a plurality of communication terminal apparatuses having a similar configuration to that of the illustrated communication terminal apparatus 20 may be connected to the communication line 40. The distributing server 50 is connected to the communication line 40 by a communication interface, not shown.

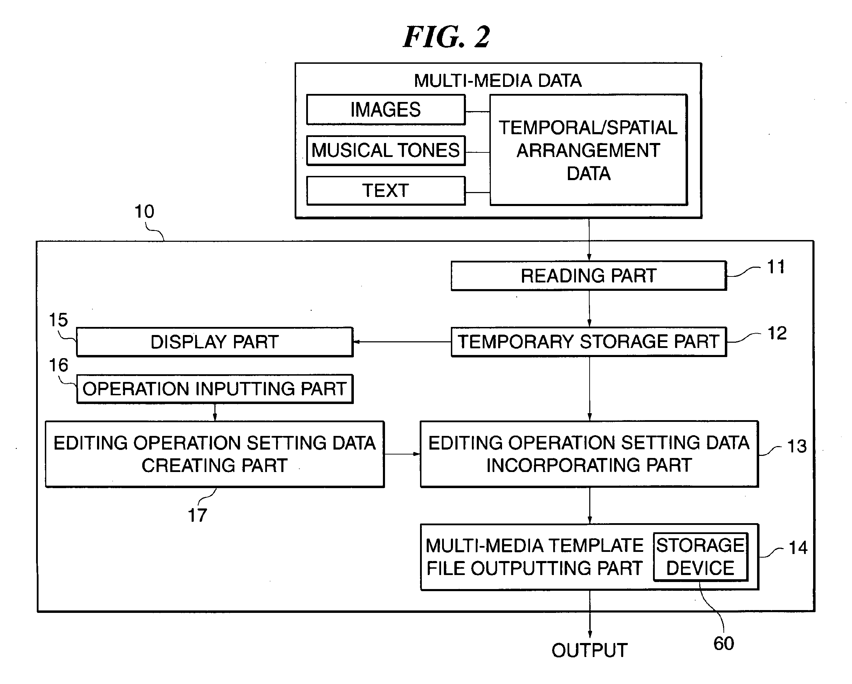

FIG. 2 is a block diagram showing the internal configuration of the template creating apparatus 10. The template creating apparatus 10 has a function of producing multi-media template files (hereinafter referred to as "MMT files"), described later, from multi-media data that has already been created, and then outputting the MMT files. Here, the multi-media data is comprised of data in which various types of media data such as images, musical tones and text (character strings) are mixed together, together with temporal/spatial arrangement data (sequence data). The temporal/spatial arrangement data determines the reproduction timing and reproduction form for each piece of the media data, i.e. the temporal/spatial arrangement, for example when to reproduce the media data and/or in what position to display the media data.

The "reproduction timing", in the present embodiment, determines the timing in which reproduction is started, but the "reproduction timing" may also determine the timing in which reproduction is ended. Moreover, the "reproduction form" is determined in accordance with the type of the media data; for example, in the case that the media data is musical tone data (which may be either MIDI data or waveform data), elements that are to be determined include the sound volume, and the application of sound effects; in the case that the media data is visible data such as an image or text, the elements include the display position on a screen, the display size, and the display color; in the case that the media data is a signal for making a vibrator 32, described later, vibrate, the elements include the magnitude and form of the vibration of the vibrator 32; in the case that the media data is a signal for making a light emitter 33, described later, emit light, the elements include the brightness, color and form of the light emitted by the light emitter 33. The media data thus includes signals for the vibrator and for the light emitter, and is not limited to being as in the above examples.

The template creating apparatus 10 is configured such that a reading part 11, a temporary storage part 12, an editing operation setting data incorporating part 13, and a multi-media template file output part 14 are connected together in series. Moreover, a display part 15 is connected to the temporary storage part 12, and an operation input part 16 is connected to the editing operation setting data incorporating part 13 via an editing operation setting data creating part 17.

The reading part 11 is comprised of a storage device or a communication interface, not shown, and reads in multi-media data from a storage medium or through communication. The temporary storage part 12 is comprised of a RAM or the like, and temporarily stores the multi-media data that has been read in. The display part 15 is comprised of an LCD or the like, and displays various kinds of information, for example the contents of the multi-media data stored in the temporary storage part 12. The operation input part 16 is comprised of a keyboard or the like, and is used for an operator (hereinafter referred to as the "creator") who carries out MMT file creation using the template creating apparatus 10 to carry out input operations of inputting commands or instructions, settings and so on.

The editing operation setting data creating part 17 creates editing operation setting data, described later, and the editing operation setting data incorporating part 13 incorporates the created editing operation setting data into the multi-media data that has been read in, thus producing an MMT file. The multi-media template file output part 14 is comprised of a storage device 60, and a communication interface, not shown, and stores the produced MMT file in the storage device 60, or outputs the produced MMT file to an external device or apparatus via the communication interface, for example sends the produced MMT file to the distributing server 50 via the communication line 40. It should be noted that the storage device 60 may be a portable storage medium, or may be a fixed storage medium that is, for example, inside a server apparatus on a network. Moreover, overall control of the template creating apparatus 10 is carried out by a CPU, not shown. Control programs executed by the CPU are stored, for example, on a hard disk or in a ROM, not shown.

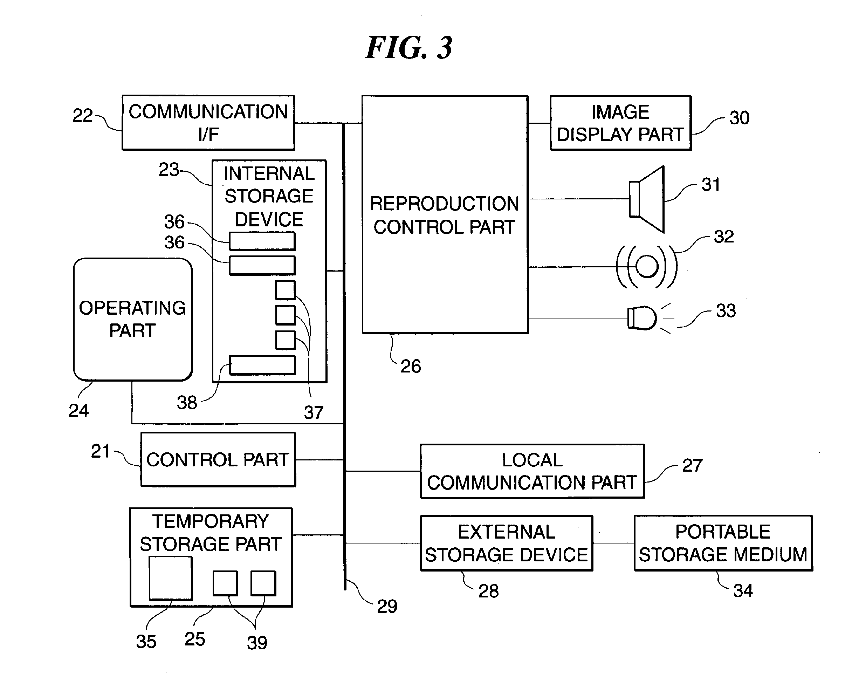

FIG. 3 is a block diagram showing the internal configuration of the communication terminal apparatus 20. The communication terminal apparatus 20 is configured, for example, as a mobile telephone, and has a function of editing MMT files distributed from the distributing server 50.

The communication terminal apparatus 20 is configured such that a communication interface (I/F) 22, an internal storage device 23, an operating part 24, a temporary storage part 25, a reproduction control part 26, a local communication part 27, and an external storage device 28 are connected to a control part 21 via a bus 29. Moreover, an image display part 30, a sound outputter 31, the vibrator 32, and the light emitter 33, which constitute a group of devices for reproducing multi-media data, are connected to the reproduction control part 26. The image display part 30 is comprised of an LCD or the like, and the sound outputter 31 is a tone generator circuit and a sound system or the like.

The control part 21 is comprised of a CPU, a RAM as a working memory, a ROM that stores control programs executed by the CPU, and so on (none of these are shown in the figure). The communication I/F 22 connects the communication terminal apparatus 20 to the distributing server 50 via the communication line 40. The internal storage device 23 is comprised of a flash memory or the like, and stores various data, for example unedited MMT files 36 that have been acquired, edited MMT files 38, and various types of media data 37 used as raw material elements. The operating part 24 is comprised of keys, a touch panel, and so on, and receives input operations from an operator (hereinafter referred to as the "user") of the communication terminal apparatus 20, who is the editor of the MMT files. The temporary storage part 25 is comprised of a RAM or the like, and temporarily stores various data, for example an unedited MMT file 35 that has been acquired, and various types of media data 39 used in the editing.

An MMT file is acquired, for example, by being received by the communication I/F 22 from the distributing server 50 via the communication line 40, and is first stored in the internal storage device 23 as an unedited MMT file 36. Alternatively, an MMT file may be acquired by being read in from the local communication part 27 or the external storage device 28. Alternatively, an MMT file may be acquired by accessing the storage device 60 by some method and then reading in the MMT file from the storage device 60. Moreover, an MMT file 35 in the temporary storage part 25 is generally an MMT file 36 stored in the internal storage device 23 that has been read into the temporary storage part 25 for editing, but may also be an MMT file that has been read into the temporary storage part 25 directly from the communication I/F 22, the local communication part 27, the external storage device 28, or the storage device 60. It should be noted, however, that there is no limitation to these routes for acquiring the MMT files 35 and 36.

The media data 37 is obtained by being received as raw material elements from the distributing server 50 via the communication I/F 22, or by reading in images that the user has taken using a camera from the local communication part 27 or the external storage device 28. Moreover, the media data 39 is generally media data 37 that has been read out from the internal storage device 23 during editing of an MMT file. It should be noted, however, that there is no limitation to these routes for acquiring the media data 37 and 39.

The reproduction control part 26 controls the image display part 30, the sound outputter 31, the vibrator 32 and the light emitter 33 based on media data. For example, musical tone data is converted into sound by applying various effects thereto as necessary, and is then outputted from the sound outputter 31. Alternatively, images and text are displayed in a suitable position on the image display part 30, or the vibrator 32 is made to vibrate, or the light emitter 33 is made to emit light. The local communication part 27 is a means for carrying out short distance data communication such as a USB (universal serial bus), an IEEE 1394, a LAN, or a Bluetooth (registered trademark). The external storage device 28 is capable of storing various data on a portable storage medium 34 such as a memory card, a floppy (registered trademark) disk, or a CD-R.

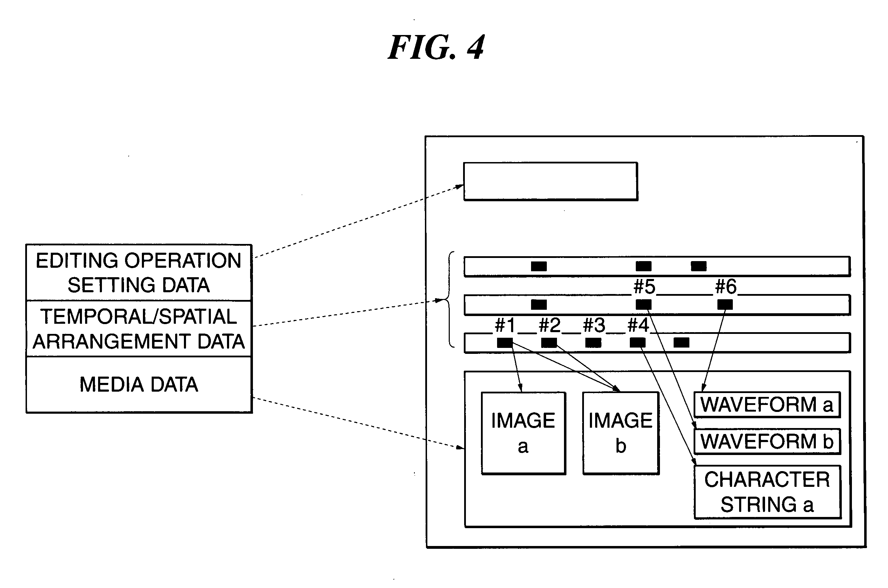

FIG. 4 is conceptual diagrams showing the structure of an MMT file. A portion on the left side of FIG. 4 shows the data structure of the MMT file, and a portion on the right side of FIG. 4 shows visually the temporal/spatial arrangement of the various media data in the MMT file as determined by the editing operation setting data. In particular, temporal/spatial arrangement data numbers (#) are shown in time series fashion in reproduction timing order.

As shown in the portion on the left side of FIG. 4, the MMT file is comprised of multi-media data that is comprised of temporal/spatial arrangement data and media data, and editing operation setting data that is appended to (incorporated into) the multi-media data such that pieces of the editing operation setting data correspond to respective corresponding pieces of the multi-media data. Here, each piece of editing operation setting data determines whether or not the corresponding piece of multi-media data can be subsequently edited and permitted forms of editing for the corresponding piece of multi-media data. From the standpoint of the user who edits the MMT file, the editing operation setting data determines media data to be changed and ways in which the media data can be changed. Specifically, the editing operation setting data determines contents such as in the following contents examples (a) to (d).

Contents example (a): Media data that can be reproduced with reproduction timing indicated by temporal/spatial arrangement data #1 is image a and image b, and of these either can be selected as the user desires.

Contents example (b): Media data that can be reproduced with reproduction timing indicated by temporal/spatial arrangement data #2 is image b, and whether image b is actually displayed or not can be selected as the user desires.

Contents example (c): Media data that can be reproduced with reproduction timing indicated by temporal/spatial arrangement data #3 is at present unspecified (or is specified to be any media data), but the user may appoint any subsequently acquired alternative media data as media data to be reproduced (or may substitute already determined media data with alternative media data).

Contents example (d): Media data that can be reproduced with reproduction timing indicated by temporal/spatial arrangement data #4 is a character string a, but at least one of the display timing and the display position of this character string a may be changed within a predetermined range.

Moreover, temporal/spatial arrangement data #5 and #6 determine waveform a and waveform b respectively, but these waveforms are not determined to be changeable by the editing operation setting data, and hence the user cannot subsequently modify these waveforms. The creator of the MMT file can appoint basic core parts that he/she wishes to be retained as his/her own creative aims to be such media data for which modification is forbidden, whereby for example the creative aims can be maintained as a template.

It should be noted that the above are merely examples, and all kinds of editing operations that the user could carry out on the multi-media data can be determined as editing operation setting data.

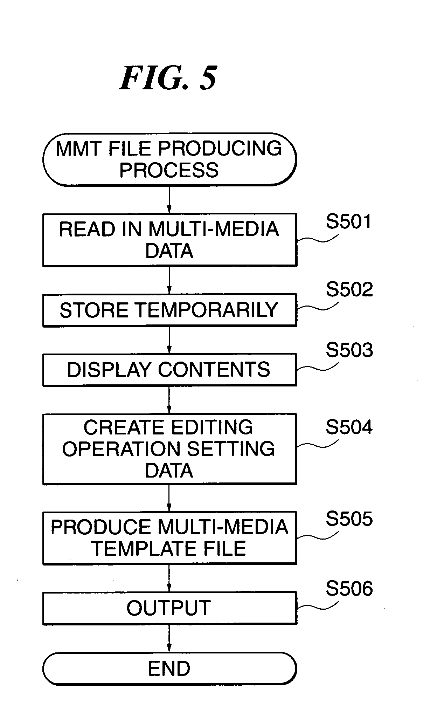

FIG. 5 is a flowchart of an MMT file producing process carried out by the template creating apparatus 10.

First, multi-media data is read in by the reading part 11 (step S501), and the read in multi-media data is stored in the temporary storage part 12 (step S502). Next, the multi-media data stored in the temporary storage part 12 is put into a form that is easy for the creator to understand, and is displayed on the display part 15 (step S503). For example, as with the multi-media data part of the MMT file shown in the portion on the right side of FIG. 4, which pieces of media data are to be reproduced in which timing and so on is displayed so as to be visibly understandable.

The creator looks at the displayed multi-media data, and inputs commands with regard to what kind of editing is to be permitted for which piece of media data using the operation input part 16. Editing operation setting data of contents like those illustrated in contents examples (a) to (d) above is then created by the editing operation setting data creating part 17 in accordance with the inputted commands (step S504). Next, the created editing operation setting data is incorporated by the editing operation setting data incorporating part 13 into the multi-media data that has been read in and stored, thus producing an MMT file (step S505). The MMT file thus produced is then outputted by the multi-media template file output part 14 (step S506). In the present embodiment, the MMT file is sent to the distributing server 50 via the communication line 40. The MMT file producing process then is terminated.

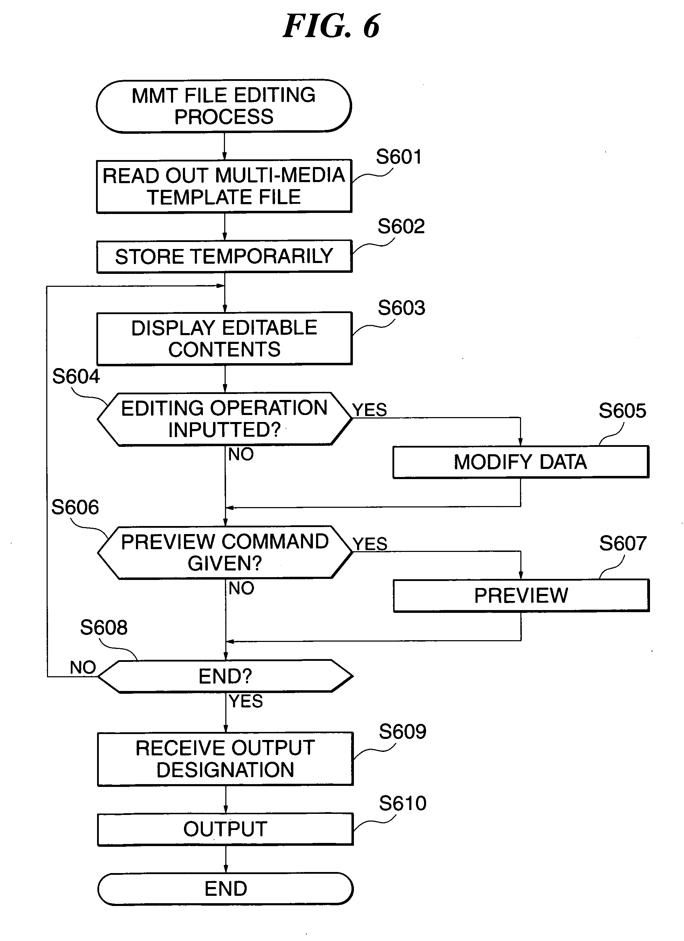

FIG. 6 is a flowchart of an MMT file editing process carried out by the communication terminal apparatus 20.

First, an MMT file is read out (step S601). Specifically, an unedited MMT file 36 that has been acquired in advance and stored in the internal storage device 23 is read out. Next, the read out MMT file 36 is stored in the temporary storage part 25 as an MMT file 35 (step S602). The MMT file 35 contains multi-media data and editing operation setting data as described earlier, and these are stored with the correspondence relationship therebetween maintained.

Next, for the MMT file that is to be edited, information indicating contents that can be edited by the user (hereinafter referred to as "editable contents information") is displayed on the image display part 30 in accordance with the stored editing operation setting data (step S603). For example, after a message "Editing operations that can be carried out are as follows", the undermentioned messages (A) to (D), which correspond to the contents examples (a) to (d) described earlier, are listed. Here, the reproduction timing determined by temporal/spatial arrangement data #n is referred to as "timing #n".
(A) As media data that can be reproduced in "timing #1", you can select either image a or image b. Which do you select?
(B) You can select image b to be displayed or not to be displayed in "timing #2". Which do you select?
(C) You can set alternative media data of your choice to be reproduced in "timing #3". Alternatively, you can set alternative media data of your choice to be reproduced instead of the currently determined media data. Do you want to set alternative media data? Alternative media data that can be set is "xxx", "yyy" and "zzz".
(D) You can change the display timing and/or display position of character string a, which will be displayed in "timing #4". You can make the display timing earlier or later. You can move the display position up, down, left, right, up and right, down and right, up and left, or down and left. Do you want to make a change?

It should be noted that the editable contents information need merely be presented in such a way as to be understandable to the user, and there is no limitation to the above form. Moreover, the media data such as "xxx" is, for example, media data 39 stored in the temporary storage part 25. Moreover, in response to message (D) above, the users inputs values for the amount of change in the display timing and the display position. The commands for the editing operations can be inputted using the operating part 24.

Next, input of an editing operation from the user is awaited, and it is determined whether or not there has been input (step S604); when there has been no input, the process proceeds to step S606, whereas when there has been input, the multi-media data in the MMT file is modified in accordance with the input editing operation (step S605) and then the process proceeds to step S606. For example, if the user selects image a in response to message (A), then the multi-media data is modified such that only image a is displayed in "timing #1". The modification of the multi-media data can be carried out by modifying temporal/spatial arrangement data #1; there is no need to delete image b, which is not targeted for display, from the multi-media data. In particular, to cope with the case that undo processing is provided, and/or the case of leaving room for restoration or further editing to be subsequently carried out by the user or other users, it is preferable not to delete the media data itself.

Similarly, if, for example, the user selects "Don't display" in response to message (B), then the multi-media data is modified such that image b is not displayed in "timing #2". Moreover, if, for example, the user gives a command to set "xxx" as alternative media data in response to message (C), then the multi-media data is modified such that "xxx" is reproduced in "timing #3". Moreover, if, for example, the user gives commands to make the display timing of text a earlier by a designated time period and move the display position of character string a up and to the right by a designated amount in response to message (D), then the multi-media data is modified such that character string a is displayed in "timing #4" earlier by the designated time period and in a position moved up and to the right by the designated amount relative to the original settings.

In step S606, it is determined whether or not the user has given a preview command. If a preview command has not been given, step S608 is proceeded to, whereas if a preview command has been given, preview processing is carried out (step S607) and then the process proceeds to step S608. The preview processing mentioned here is reproduction of the multi-media data that is currently being edited; in accordance with each piece of media data, the reproduction control part 26 carries out control such that the corresponding element out of the image display part 30, the sound outputter 31, the vibrator 32 and the light emitter 33 operates. As a result, the user can verify the state of editing at any time, and hence decide whether or not to carry out further modification.

In step S608, it is determined whether or not a command to end the editing processing has been given, and if no such command has been given, the process returns to step S603. It should be noted that even if the multi-media data has already been modified, the same part can be modified again any number of times, so long as the modification is within the scope permitted by the editing operation setting data, or the multi-media data can be restored to how it was before. Consequently, in step S603, it is preferable to carry out display such that not only the editable contents information but also the current selection state can be understood by the user.

On the other hand, if a command to end the editing processing has been given, an output designation for the edited MMT file is received (step S609). As this output designation, for example sending to an external apparatus via the communication I/F 22 or the local communication part 27, storage to the internal storage device 23 as an edited MMT file 38, or storage to the portable storage medium 34 via the external storage device 28, can be selected. Next, the edited MMT file is outputted in accordance with the output designation (step S610), whereupon the MMT file editing process is terminated.

A more detailed and concrete example of the MMT file editing process of FIG. 6 will now be described, together with examples of editing screens.

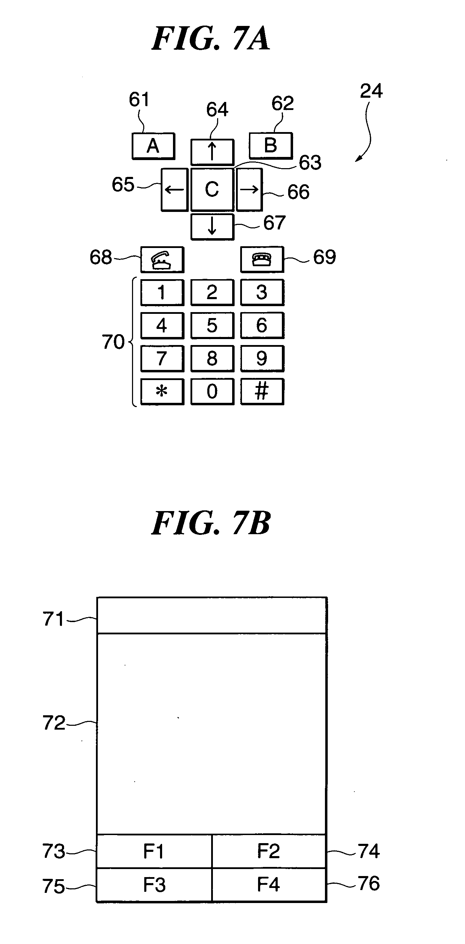

FIG. 7A is a view showing the layout of the operating part 24 appearing in FIG. 3, and FIG. 7B is a view showing an example of a display screen on the image display part 30.

As shown in FIG. 7A, the operating part 24 has function buttons 61 to 63, cursor keys 64 to 67, an outgoing call button 68, a finish call button 69, number keys 70, and so on. The function button 63 is used, for example, as a confirm key. The cursor keys 64 to 67 are used to move a cursor on a text input screen or the like, and the cursor keys 64 and 67 are also used to move the focus during menu selection. The cursor keys 65 and 66 can also be allocated functions (help, preview, etc.) in accordance with the display screen (e.g. editing screen) displayed in the image display part 30. The function buttons 61 and 62 can also be allocated functions (end, return, etc.) in accordance with the display screen displayed in the image display part 30. The number keys 70 can also be used in text input and so on.

During the MMT file editing process, for example an editing screen such as that shown in FIG. 7B is displayed in the image display part 30. A screen title is displayed in a display region 71, and various kinds of information such as the editable contents information described earlier, selection items, input elements, and so on are displayed in a display region 72 in the form of menus, icons, buttons, text boxes and so on. In display regions 73, 74, 75 and 76, for example display is carried out corresponding to the functions allocated to the function buttons 61 and 62 and the cursor keys 65 and 66. Moreover, the display region 72 and the display regions 73 to 76 may also be made to display information such as icons corresponding to short-cut keys or allocated keys.

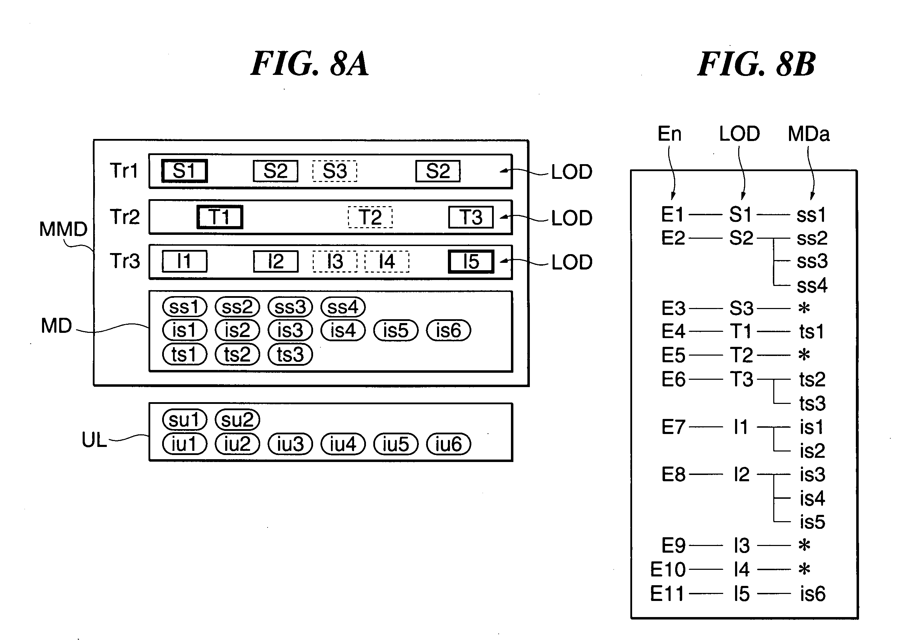

FIG. 8A is a diagram illustrating part of the data structure of each of the MMT file before the editing processing and a user library. FIG. 8B is a conceptual diagram showing the editable contents of the multi-media data as determined by the editing operation setting data.

FIG. 8A corresponds to the portion on the right side of FIG. 4, but the depiction of the editing operation setting data in the MMT file is omitted. As in the portion on the right side of FIG. 4, the temporal/spatial arrangement of the media data MD in the multi-media data MMD is shown visibly. The temporal/spatial arrangement data LOD is shown in time series fashion in reproduction timing order in different data tracks Tr1, Tr2 and Tr3 in accordance with the type of the corresponding media data MD (musical tone, text, or image). The temporal/spatial arrangement data LOD is marked "S1", "T1", "I1" and so on, with the initial letter "S", "T" or "I" being attached in accordance with the type of the corresponding media data MD, i.e. musical tone, text, or image. Moreover, in FIG. 8A the thick solid lines enclosing the pieces of temporal/spatial arrangement data LOD "S1", "T1" and "I5" in the data tracks Tr indicate that these pieces of temporal/spatial arrangement data LOD cannot be edited.

Moreover, the user library UL corresponds, for example, to the various media data 37 and 39 in the internal storage device 23 and the internal temporary storage part 25 appearing in FIG. 3. The media data MD is marked "ss1, "is1" "ts1" and so on, and the contents of the user library UL are marked as "su1, "iu1" and so on, with the initial letter "s", "i" or "t" being attached in accordance with the type of the media data MD as in the case of the temporal/spatial arrangement data LOD.

In the conceptual diagram shown in FIG. 8B, whether or not editing is permitted and the contents that can be edited as determined by the editing operation setting data are shown for each of the pieces of temporal/spatial arrangement data LOD (S1, S2 etc.). Here, contents corresponding to the contents examples (a) and (c) described earlier are illustrated; for each piece of temporal/spatial arrangement data LOD, pieces of media data that can be selected as media data that can be reproduced in the reproduction timing in question (hereinafter referred to as "to be changed") are shown.

Moreover, a different number En is made to correspond to each piece of temporal/spatial arrangement data LOD. The numbers En are, for example, attached to the temporal/spatial arrangement data LOD as consecutive numbers in the order of musical tones, text, images and in time series fashion when creating the MMT file.

Looking at whether or not editing is permitted and the contents that can be edited, for example with regard to the temporal/spatial arrangement data LOD S1 of number E1 shown in FIG. 8B, the media data that can be reproduced in that reproduction timing is fixed as ss1, and cannot be changed, i.e. editing is not permitted. Regarding the temporal/spatial arrangement data LOD S2 of number E2, any of ss2, ss3 and ss4 can be selected as desired as the media data that can be reproduced in that reproduction timing.

Regarding the temporal/spatial arrangement data LOD T2 of number E5, "*" is written as the media data that can be reproduced in that reproduction timing; in this case, "*" is a "wildcard", i.e. the user can select the media data that can be reproduced from out of the media data MD and the user library UL as desired. Here, the media data that can be reproduced can be selected from out of text data, which is the type of media data MD corresponding to the temporal/spatial arrangement data LOD T2, for example out of the text data ts1 to ts3 (see FIG. 8A). It should be noted that the media data MDa to be changed is not limited to being from out of the media data MD or the user library UL, but rather media data that is inputted in real time, for example text data that is inputted through text input using the number keys 70 or the like, or musical tone or image data (which may be captured data) inputted from a microphone, a camera or the like connected to the communication terminal apparatus 20, may also be included as selectable media data.

In this way, in the example of FIG. 8B, the editable temporal/spatial arrangement data LOD is that corresponding to the numbers E2, E3, and E5 to E10, and the data LOD that corresponding to the numbers E1, E4 and E11 is non-editable.

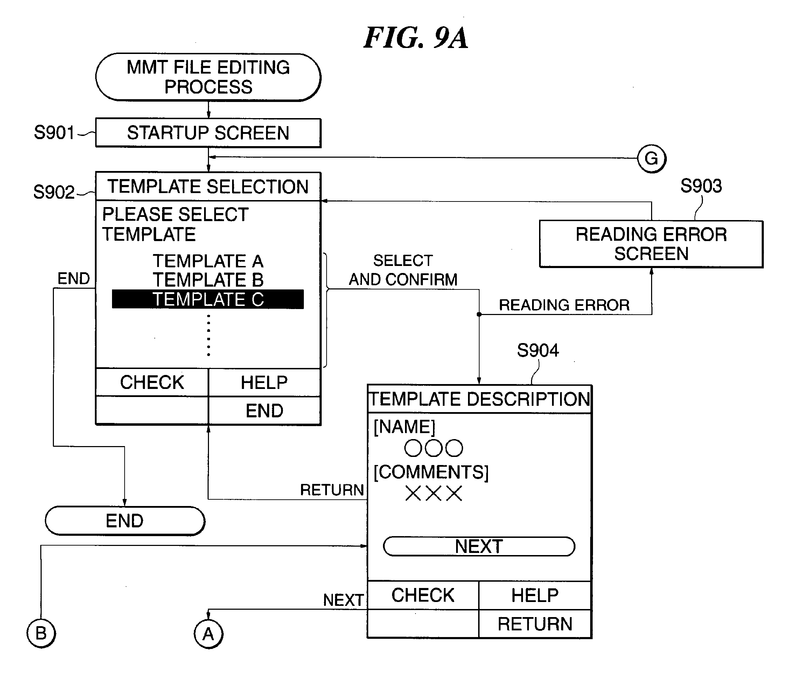

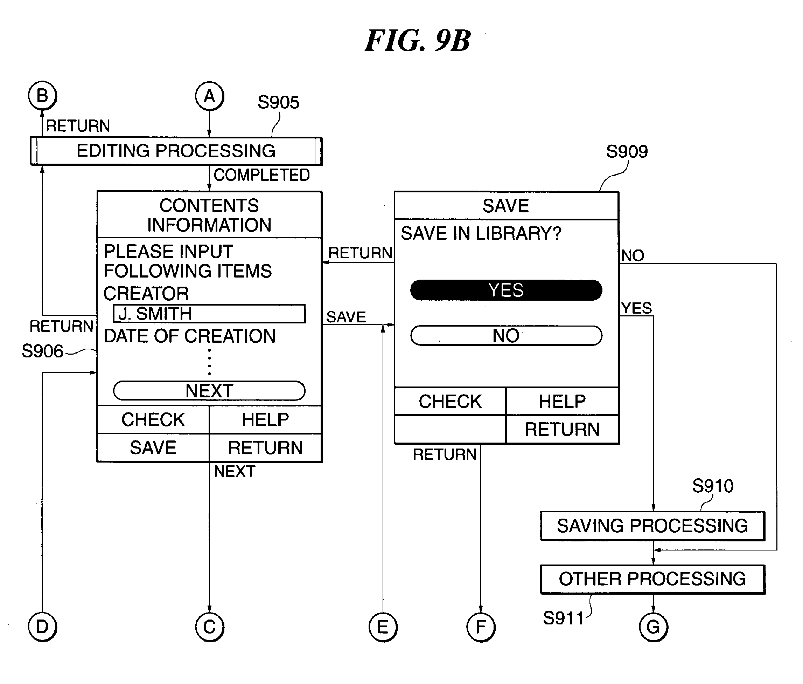

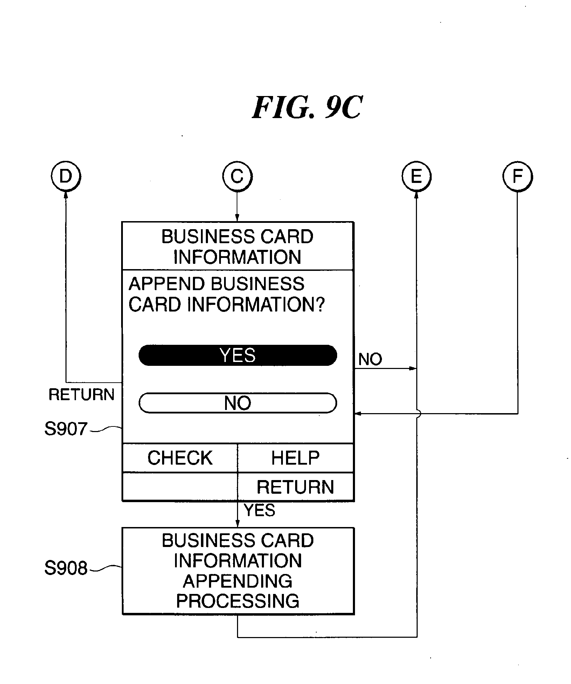

FIGS. 9A to 10C are flowcharts showing a detailed specific example of the MMT file editing process. FIG. 10A shows a display example of a preview reproduction screen. FIG. 10B shows a display example of a help screen. FIG. 10C shows a display example of a jump destination selection screen. Steps S901 to S904 in FIGS. 9A to 9C correspond to steps S601 and S602 in FIG. 6, steps S905 to S908 in FIGS. 9A to 9C correspond to steps S603 to S608 in FIG. 6, and steps S909 to S911 in FIGS. 9A to 9C correspond to steps S609 and S610 in FIG. 6. Moreover, a description will be given taking the MMT file shown in FIGS. 8A and 8B as an example of the MMT file being edited.

In the MMT file editing process shown in FIGS. 9A to 10C, the editable contents information is displayed as setting, selection and/or editing screen on the image display part 30 in the form shown in FIG. 7B, and shifting between screens is carried out in accordance with the user's operations. Schematic display screens are thus used within the flowcharts. Note that information required for displaying the editing screens and so on is stored in the temporary storage part 25. Moreover, so that shifting from each screen to the immediately preceding immediately preceding screen or another screen can be carried out using, for example, "return" or "jump" as described later, information for screens for which the setting processing has been completed is not deleted, but rather is held in the temporary storage part 25 along with data, variables and so on.

First, a startup screen is displayed (step S901), and then a template selection screen for selecting the MMT file to be edited is displayed (step S902). Here, the user selects a desired MMT file, and then presses the function button 63, which acts as the confirm key. As a result, as in step S601 described earlier, an unedited MMT file 36 is read out from the internal storage device 23, and is stored in the temporary storage part 25 as an MMT file 35.

Here, in the case that a reading error occurs, a reading error screen is displayed (step S903), and the process returns to step S902. On the reading error screen, for example dialogue for notifying the user of the details of the error is displayed, and then the user presses the function button 63, whereupon the screen moves to the immediately preceding screen (step S902) or another predetermined screen. Alternatively, it may be configured such that the reading is retried after a predetermined time period has passed. It should also be noted that the use of an error screen is not limited to this step, but rather an error screen can be used with any of the other setting, selection and editing screens. Moreover, a configuration may also be adopted in which not only in the case of an error but also in the case of success, dialogue for notifying the user of this is displayed.

At the screen of step S902, in addition to the above, "check", "help" and "end" can be selected. In the case that "end" is selected, the MMT file editing process is terminated. In the case that "check" is selected, the process proceeds to step S1001 shown in FIG. 10A, and preview reproduction is carried out. Specifically, the MMT file being currently selected is reproduced, including musical tones, as is in an unedited state, i.e. preview musical tone reproduction and preview screen display are carried out. The previous screen (step S902) is then returned to once the preview reproduction has been completed or if "return" is selected.

In the case that "help" is selected at the screen of step S902, the process proceeds to step S1002 shown in FIG. 10B, and a help screen is displayed. Specifically, a supplementary explanation (help contents) regarding the setting method and so on for the previous screen (step S902) is displayed. The previous screen is returned to by selecting "return". Note that the help contents are stored in advance in the internal storage device 23.

Moreover, although not shown in the figures, in the present MMT file editing process, for example a jump function is allocated to a predetermined key (referred to as the "jump key"), and if the jump key is pressed at any given screen, then the process proceeds to step S1003 shown in FIG. 10C, and a jump destination selection screen is shown. At this jump destination selection screen, a selected screen (including not only screens for which processing has already been carried out but also screens for which processing has not yet been carried out) can then be moved to by selecting a jump destination and then confirming by pressing the function button 63. Moreover, the previous screen can be returned to by selecting "return". It should be noted that with other screens hereafter as well, in the case that "check", "help" and/or "return" are displayed, operations when these are selected are similar to the case for the screen of step S902 described above.

Returning to FIGS. 9A to 9C, once the MMT file selected at step S902 described above has been properly read in, the process proceeds to step S904, and an MMT file description screen is displayed. On this screen, the name of the selected MMT file, accompanying comments, and "Next" are displayed, and moreover information such as the number of pieces of temporal/spatial arrangement data LOD contained in the MMT file, the type, the time required for reproduction, the data size before editing, the category (e.g. "celebration", "general", etc.), and whether or not editing of the MMT file is permitted is displayed. Moreover, to make category selection easy, it may be configured such that category sorting can be carried out by operating a predetermined key that has been allocated a sort function based on the various information mentioned above.

At the MMT file description screen, in the case that "return" is selected, the immediately preceding screen, i.e. the screen of step S902, is returned to. Note that at other screens hereafter as well, in the case that "return" is displayed, the immediately preceding screen can be returned to by selecting "return", as in the case of the screen of step S904 described above. On the other hand, in the case that "Next" is selected and then the confirm key is pressed, editing processing is carried out as described later (step S905). As will be described in detail later, in the editing processing, for example through a time series editing process, described later with reference to FIG. 11, editing operations are received from the user, and the multi-media data in the MMT file is modified in accordance with these editing operations. It is also possible to return to step S904, described above, from this editing processing. When the editing processing has been completed, the process proceeds to step S906.

In step S906, a contents information input screen, i.e. a screen for inputting the name of the creator, the date of creation and so on for the edited MMT file 38 after the editing has been carried out through the editing processing, is displayed. On this screen, "Next", "Save" and so on are also displayed. At this screen, in the case that "Next" is selected and the confirm key is pressed, a card information appendage setting screen is displayed (step S907). At this screen, the user can select whether or not card information is appended to the edited MMT file 38 by selecting "Yes" or "No" and then pressing the confirm key. Here "card information" is a group of information in which various information generally written on a card such as a business card, including the user's name, company, address, telephone number, electronic mail address, and homepage URL is contained in fields, for example data in vCard (Electronic Business Cards) (registered trademark) format.

If "Yes" is selected and then the confirm key is pressed, card information appending processing is carried out (step S908) and then the process proceeds to step S909, whereas if "No" is selected and then the confirm key is pressed, the process proceeds to step S909 without carrying out the card information appending processing. Moreover, if "Save" is selected at the screen of step S906, described above, the process proceeds to step S909 immediately without the card information appendage setting screen being displayed.

In step S909, an MMT file saving screen is displayed. Here, it can be selected whether or not the edited MMT file 38 is saved in a library. If "Yes" is selected and then the confirm key is pressed, the process proceeds to step S910, and the edited MMT file 38 is stored in a library, for example in a predetermined folder in the internal storage device 23 or on the portable storage medium 34. On the other hand, if "No" is selected and confirmed, step S911 is proceeded to. Moreover, the process also proceeds to step S911 after the storing processing of step S910.

In step S911, other processing is carried out. For example, as in step S610 in FIG. 6, sending (as electronic mail or the like) is carried out to an external apparatus via the communication I/F 22 or the local communication part 27, and then the process returns to step S902.

In the editing processing of step S905 in FIGS. 9A to 9C, the editable contents information is presented, editing operations are received, and the multi-media data is modified in accordance with the received editing operations within a scope permitted by the editing operation setting data; various forms can be envisaged for the editing processing, but in the present embodiment, four forms of editing processing "time series editing process", "numerical order editing process", "list display selection editing process" and "reproduction-concurrent editing process" will be given as examples. Out of these forms of editing processing, the user can select which to use as desired; the user can select the form by operating predetermined keys (for example character buttons, not shown in the drawings, that designate the type of inputted characters) allocated this function. Moreover, it may be configured such that the form of the editing processing can be switched over at any given screen; regarding the screen display in this case, it may be made to be such that, for the form after the switchover, processing starts from the screen for which processing was in the middle of being carried out before the switchover, or such that processing starts from an initial screen. It should also be noted that the forms of editing processing are not limited to the above four.

### Time series editing process

FIG. 11 is a flowchart of the time series editing process. In the time series editing process, editing screens for editable temporal/spatial arrangement data LOD are displayed as editable contents information in order of the reproduction timing determined by the editing operation setting data from the earliest reproduction timing (i.e. in time series fashion). Specifically, in the example of FIGS. 8A and 8B, in terms of the numbers En, the editing screens are displayed in the order of E7, E2, E8, E3, E9, E5, E10, and E6. Each editing screen contains a selection receiving screen for the media data MDa to be changed corresponding to the piece of temporal/spatial arrangement data LOD in question; modification can thus be carried out for one piece of temporal/spatial arrangement data LOD per screen.

FIG. 12A is a diagram illustrating part of the data structure of each of the user library and the MMT file after the editing processing. FIG. 12B is a conceptual diagram showing the editable contents of the multi-media data after the editing processing as determined by the editing operation setting data. FIGS. 12A and 12B correspond to FIGS. 8A and 8B respectively.

In the time series editing process of FIG. 11, with regard to "help" displayed on each of the editing screens, operation when it is selected is the same as in the case of FIGS. 9A to 9C. If "return" is selected, then the editing immediately preceding screen is returned to. Moreover, if "check" is selected, then the media data that is currently in a selection/setting state or an input state is reproduced as a preview. Moreover, if "end" is selected, the time series editing process is terminated without passing through the subsequent editing screens. Furthermore, after the various items have been selected, set and/or inputted, if the function button 63, which functions as the confirm key, is pressed, then the screen changes to the next editing screen in the time series.

First, in step S1101, an editing screen for the piece of temporal/spatial arrangement data LOD I1 of number E7, which has the earliest reproduction timing out of the editable temporal/spatial arrangement data LOD, is displayed, and selection items for the selectable pieces of image data is1 and is2 are displayed as the media data MDa to be changed corresponding to this piece of temporal/spatial arrangement data LOD. Once one of the pieces of media data MDa to be changed has been selected and confirmation has been carried out by pressing the function button 63, the process moves to the next step S1102.

For example, in the case that the piece of image data is2 is selected and then the confirm key is pressed, as shown in FIG. 12B, the image data is2 becomes the reproduction target for the temporal/spatial arrangement data LOD I1 of number E7. In FIGS. 12A and 12B, media data that has been targeted for reproduction as a result of the editing is enclosed by solid lines. Moreover, the image data is1 is not selected, and thus will no longer be used for reproduction in the current MMT file; to indicate this, in FIG. 12A "is1" is enclosed by a broken line. It should be noted, however, that this is merely a conceptual diagram, and as mentioned earlier, there is no need to actually delete media data that will no longer be used such as the image data is1 from the media data MD or the user library UL. Moreover, it is also possible to adopt a configuration in which a screen that asks whether or not the media data should be deleted is displayed separately, and then deletion processing is actually carried out if "Yes" is selected, or a configuration in which media data that will no longer be used is deleted when the MMT file is saved or sent out.

Note that on the editing screen, as the form of displaying the media data MDa to be changed, instead of displaying only the selectable media data, a configuration may also be adopted in which both the selectable media data and the unselectable media data are displayed, but the display form is made to be different for the unselectable media data than for the selectable media data, and it is made to be such that the unselectable media data cannot be selected. The same applies to the other editing screens hereafter.

Returning to FIG. 11, the editable temporal/spatial arrangement data LOD having the next earliest reproduction timing is the LOD S2 and the LOD I2 (see FIG. 8A); the reproduction timing is the same for these two pieces of temporal/spatial arrangement data LOD. In the present embodiment, in the case that pieces of temporal/spatial arrangement data LOD have the same reproduction timing as one another, the order of precedence is made to be, for example, musical tone, text, and image. In step S1102, an editing screen for the piece of temporal/spatial arrangement data LOD S2 for number E2, which relates to musical tone data, is thus displayed, and selection items for the selectable pieces of musical tone data ss2, ss3 and ss4 are displayed as the media data MDa to be changed corresponding to this piece of temporal/spatial arrangement data LOD. Note that the setting of the order of precedence is not limited to being as in the above example, but rather the order of precedence for pieces of temporal/spatial arrangement data LOD having the same reproduction timing may be made to be, for example, from the lowest number En upwards. The display of the editing screen and the reception of the editing operations in step S1102 are as for step S1101, described above, and this also applies to step S1103 and step S1108.

In step S1104, an editing screen for the piece of temporal/spatial arrangement data LOD S3 of number E3 is displayed. Here, "*" has been set as the media data MDa to be changed corresponding to this piece of temporal/spatial arrangement data LOD (see FIG. 8B), and hence selection items for all of the pieces of musical tone data in the media data MD and the user library UL are displayed. If, for example, a piece of musical tone data su2 from out of the user library UL is selected, then the musical tone data su2 is newly added to the media data MD as musical tone data ss5 (see FIG. 12A), and moreover the musical tone data ss5 is made to be the reproduction target for the temporal/spatial arrangement data LOD S3 (see FIG. 12B).

The display of the editing screen and the reception of editing operations in steps S1105 and S1107 are the same as for the step S1104, described above.

In step S1106, an editing screen for the piece of temporal/spatial arrangement data LOD T2 of number E5 is displayed. Here, "*" has been set as the media data MDa to be changed corresponding to this piece of temporal/spatial arrangement data LOD (see FIG. 8B), and hence normally selection items for all of the pieces of text data in the media data MD and the user library UL would be displayed. However, in the present embodiment, the configuration is made to be such that using a switchover key, not shown in the figures, the user can select as desired a real time input mode in which text data inputted using the number keys 70 is used as described earlier; in step S1106, the case that this real time input mode has been selected is illustrated.

For example, an input region 77 for receiving message input is displayed on the editing screen in step S1106. The user can carry out text input using the number keys 70 or the like to input a message such as "How are you?". The text data (ts4) newly inputted in this way is added to the media data MD (see FIG. 12A), and moreover is made to be the reproduction target for the temporal/spatial arrangement data LOD T2 of number E5 (see FIG. 12B). Note that "input" in FIG. 12B indicates that the data was inputted by the user.

In step S1108, when confirmation is carried out by pressing the function button 63 after the item selection, or if "end" is selected, the present time series editing process is terminated.

According to the time series editing process described above, a method is adopted in which the editing screens for the editable pieces of temporal/spatial arrangement data LOD are displayed in the order of the reproduction timing, and the editing is carried out step by step. As a result, even for an inexperienced user, the editing operation is easy to carry out, and hence editing can be carried out with no oversights.

It should be noted that on each of the editing screens in FIG. 11, provided that the selection items can be understood by the user, icons or the like corresponding to the media data may be displayed instead of the names of the media data. Moreover, in the case of applying the time series editing process to contents such as those in contents examples (b) and (d) described earlier, for example with regard to contents example (b), display should be carried out to allow the user to select either "Display" or "Don't display" for the corresponding piece of media data that can be reproduced, and with regard to contents example (d), display should be carried out to allow the user to input values for the amounts of change in the display timing and the display position.

Furthermore, it may be configured such that, in the case that selectable pieces of media data are given as candidates for the reproduction target, a default piece of media data is preset, and in the case that the selection operation is not carried out, this default piece of media data is made to be the reproduction target. For example, for the temporal/spatial arrangement data LOD S2 of number E2, the pieces of musical tone data ss2, ss3 and ss4 are candidates for the media data MDa to be changed corresponding to this piece of temporal/spatial arrangement data LOD; if the musical tone data ss2 is set as the default, then in the case that the selection operation is not carried out by the user, the musical tone data ss2 is selected, and is made to be the reproduction target.

Moreover, in the editing operation described above, it may be configured such that a reproduction target is not merely selected from out of a plurality of pieces of media data MDa to be changed, but rather further processing/editing is carried out on the selected piece of media data. For example, for text data, one can envisage editing the text, and editing display effects; for image data, one can envisage editing the image, enlarging the size of the image, reducing the size of the image, cutting out part of the image, and editing image effects and display effects; for musical tone data, one can envisage cutting out part of the musical tone, editing a BGM melody, and editing reproduction effects. In this case, whether or not processing/editing is permitted after selection, the permitted scope of the processing/editing, and so on should also be determined in the editing operation setting data in advance.

### Numerical order editing process

FIG. 13 is a flowchart of the numerical order editing process. In the numerical order editing process, editing screens for the editable pieces of temporal/spatial arrangement data LOD are displayed as editable contents information in order from the lowest number En upwards. Specifically, in the example of FIGS. 8, the editing screens are displayed in the order of E2, E3, E5, E6, E7, E8, E9, and E10, as shown in steps S1301 to S1308 in FIG. 13. The form of display and the form of receiving editing operations for each of the editing screens are exactly the same as in the case of the time series editing process of FIG. 11. Moreover, operations such as moving to the next editing screen using the function button 63 and returning to the editing immediately preceding screen by pressing "return" are the same, and the functions of "check", "end" and "help" are the same.

According to the numerical order editing process described above, similar effects as for the time series editing process can be achieved with regard to being able to carry out editing with no oversights through easy editing operations.

### List display selection editing process

FIG. 14 is a flowchart of the list display selection editing process. In the list display selection editing process, first, in step S1401, a contents editing screen on which are listed the numbers En for the editable pieces of temporal/spatial arrangement data LOD is displayed. Selection of an element to be edited, i.e. a piece of temporal/spatial arrangement data LOD to be targeted for editing, from the list is then received as the corresponding number En. Note, however, that although here the editable pieces of temporal/spatial arrangement data LOD are determined using the numbers En, i.e. the numbers En are displayed and then the user selects a number En, a configuration may also be adopted in which, instead of the numbers En, time information such as the reproduction timing or some other information corresponding to the pieces of temporal/spatial arrangement data LOD is displayed, and then the user selects an item.

With regard to "help" displayed on the list display screen in step S1401, operation when it is selected is the same as in the case of FIG. 11. If "return" is selected, then the screen returns to the previous screen, here the screen of step S904 in FIGS. 9A to 9C. Moreover, if "check" is selected, then reproduction is carried out as a preview for the piece of temporal/spatial arrangement data LOD of the number En that is currently in a selection/setting state. Moreover, in the case that "end" is selected, the list display selection editing process is terminated.

Once the user has selected a desired number En and carried out confirmation by pressing the function button 63, the process proceeds to step S1402, and an editing screen for the piece of temporal/spatial arrangement data LOD of the selected number En is displayed. The form of display of the editing screen and the form of receiving editing operations are basically the same as in the case of each of the editing screens in the time series editing process of FIG. 11, but the former is distinguished from the latter in that after a piece of media data has been selected on the editing screen and confirmation has been carried out by pressing the function button 63, the screen returns to the list display screen of step S1401, described above. Moreover, to terminate the list display selection editing process from the editing screen of step S1402, the "end" button is used.

According to the list display selection editing process described above, the user designates pieces of temporal/spatial arrangement data LOD that he/she wishes to edit, and carries out editing operations for each of these pieces of temporal/spatial arrangement data LOD individually; the editing can thus be carried out in accordance with the user's wishes and hence more quickly.

### Reproduction-concurrent editing process

FIG. 15 is a flowchart of the reproduction-concurrent editing process. In the reproduction-concurrent editing process, an MMT file is reproduced, and when the reproduction timing for an editable piece of temporal/spatial arrangement data LOD is reached, the reproduction is suspended, editing is carried out for that piece of temporal/spatial arrangement data LOD, and then the reproduction is restarted after the editing has been completed.

First, in step S1501, in accordance with the reproduction timing determined by the temporal/spatial arrangement data LOD, the corresponding data, i.e. the media data targeted for reproduction corresponding to the temporal/spatial arrangement data LOD, is read out from the MMT file, and reproduction of the media data (preview reproduction) is started. Here, referring to the multi-media data MMD shown in FIG. 8A, time proceeds from the left edge of each data track Tr rightward; a reading pointer, not shown, thus moves from the left rightward, and when the reading pointer reaches a piece of temporal/spatial arrangement data LOD, the piece of media data that is targeted for reproduction for this piece of temporal/spatial arrangement data LOD is read out, and is reproduced.

Next, it is determined whether or not the current piece of temporal/spatial arrangement data LOD (i.e. the piece of temporal/spatial arrangement data LOD that the reading pointer is currently pointing to) is editable (step S1502), and if this piece of temporal/spatial arrangement data LOD is not editable, reproduction is continued, i.e. the processing of reading out and reproducing the piece of media data that is the reproduction target corresponding to the current piece of temporal/spatial arrangement data LOD is continued (step S1503), and then the process proceeds to step S1507. On the other hand, if the current piece of temporal/spatial arrangement data LOD is editable, the reproduction is suspended (step S1504). Note that in the case that there are a plurality of pieces of current temporal/spatial arrangement data LOD (e.g. "S1" and "I1" in FIG. 8A), the process proceeds to step S1504 so long as at least one of these pieces of temporal/spatial arrangement data LOD is editable ("I1" is editable).

Moreover, if in step S1504, a piece of musical tone data has been being reproduced, when reproduction of this musical tone data is to be suspended, it is preferable to gradually attenuate the sound output level of the musical tone data, whereby noise can be reduced. For example, in the case that the reading pointer reaches the head of "T3" in FIG. 8A while "S2" is in the middle of being reproduced, the reproduction of "S2" is suspended by gradually attenuating the sound output level of "S2".

Next, in step S1505, an editing screen corresponding to the current editable piece of temporal/spatial arrangement data LOD is displayed, and editing operations are received. Here, for example an editing screen like that in one of the steps of FIG. 11 is displayed, and the editing operations are received. Once the editing has been completed, the process proceeds to step S1506, and the reproduction of the media data is restarted from the piece of media data where the reproduction was suspended.

Note that in step S1505, in the case that, with regard to the current temporal/spatial arrangement data LOD, there is a mixture of editable temporal/spatial arrangement data LOD and non-editable temporal/spatial arrangement data LOD (e.g. "S1" and "I1" in FIG. 8A), or there are a plurality of editable pieces of temporal/spatial arrangement data LOD (e.g. "S2" and "I2" in FIG. 8A), the process proceeds to step S1506 only after the editing processing has been completed for all of the editable pieces of temporal/spatial arrangement data LOD.

Next, in step S1507, it is determined whether or not the reproduction of the media data in the MMT file has been completed, and if the reproduction has not been completed, the process returns to step S1501, whereas if reproduction has been completed, the reproduction-concurrent editing process is terminated.

Note that from the viewpoint of reducing noise when suspending reproduction of musical tone data, other forms of control processing can be envisaged. Specifically, processing may be carried out in which, in the case that the current temporal/spatial arrangement data LOD is editable in step S1502, if some musical tone data was being reproduced at that point in time, then in step S1504 the reproduction of this musical tone data is not suspended, but rather the movement of the reading pointer is suspended, and data readout is continued to the end and thus reproduction is completed for that musical tone data only.

According to the reproduction-concurrent editing process described above, while carrying out preview reproduction, when the reproduction timing for an editable piece of temporal/spatial arrangement data LOD is reached, the reproduction is suspended, editing is carried out for that piece of temporal/spatial arrangement data LOD, and then the reproduction is restarted after the editing has been completed; as a result, the state after editing can be verified immediately through preview, and hence the ease of use is improved.

In the "time series editing process", "numerical order editing process", "list display selection editing process" and "reproduction-concurrent editing process" described above, in the case that, when carrying out preview reproduction, the piece of media data to be targeted for reproduction for a piece of temporal/spatial arrangement data LOD has not yet been selected, default data either within the scope of the selection items for this piece of temporal/spatial arrangement data LOD or outside this scope may be used in the preview reproduction. Alternatively, it may be configured such that, in the case of musical tone data, silence is maintained and a message such as "Sound not set" is displayed on the screen display, and in the case of image or text data, a message such as "Not set" is displayed. Moreover, a configuration may also be adopted in which, during preview reproduction, information that identifies the media data being reproduced such as the number En corresponding to the media data or the name of the media data is displayed superimposed on the media data.

Moreover, it may be configured such that, for the editing screens and so on displayed in the four types of editing processing described above, a jump function as described earlier is allocated to a predetermined jump key, and this jump key is used as a presentation changing device, whereby another screen of the user's choice can be moved to instantly.

Furthermore, in the present embodiment, it is arranged such that the edited MMT file itself is outputted (with the editing operation setting data included therein), and then another user (e.g. an operator of another communication terminal apparatus 20) can carry out similar editing operations on the MMT file within the scope permitted by the editing operation setting data; however, it may be configured such that the editing operation setting data is removed from the edited MMT file and only the edited multi-media data is outputted, whereby reediting cannot be carried out by other users. Moreover, it may be configured such that the user can decide at will which of the above forms of output to use, or it may be configured such that, at the time that the communication terminal apparatus 20 acquires the MMT file, which of the forms of output to use is determined automatically through predetermined output setting information contained in the MMT file (i.e. inserted into the MMT file by the creator). Moreover, it may be configured such that the output destination of the multi-media data or MMT file after editing is determined by such output setting information, for example only internal storage is permitted and transmitting to the outside is forbidden, whereby the scope of the output designation in step S609 in FIG. 6 or the destination sent to in step S911 in FIGS. 9A to 9C can be restricted.

According to the present embodiment, an MMT file is produced in which editing operation setting data that determines whether or not subsequent editing of multi-media data that has already been created can be carried out and permitted forms of such editing is appended to the multi-media data in piece-to-piece correspondence to the multi-media data, and then the MMT file can be modified by a communication terminal apparatus 20 within the scope permitted by the editing operation setting data. As a result, by for example forbidding modification of basic core parts of the multi-media data that relate to creative aims of the creator of the MMT file, the creative aims and value as a creative work can be maintained, and yet by allowing a user to modify parts of the multi-media data other than the basic core parts according to his/her own ideas, the user can obtain a feeling of creative achievement of having created new multi-media data. Moreover, the MMT file is supplied as a kind of template in which the MMT file is already completed to some extent, and furthermore the possible editing operations are made clear through the editing operation setting data, which is presented during editing; the degree of freedom to carry out modification is hence not too great, and thus the editing operations are easy to carry out even for an inexperienced user, and hence it can be expected that the utility value of the multi-media data will be further increased. In particular, it is arranged such that, as editable contents information, editing screens are displayed using the time series editing process or the like, and editing operations are received step by step, and hence the editing operations are easy for the user. The user can thus be given a feeling of creative achievement through editing that can be carried out through simple editing operations, while still maintaining creative aims as a template.

Moreover, it is arranged such that a plurality of forms of editing processing are provided, and the user can carry out the editing work using whichever form he/she prefers; ease of use is thus good, with the editing work being easy to get used to for a wide variety of users.

Moreover, it is arranged such that the template file editing apparatus is a communication terminal apparatus 20 that has a communication function and can thus acquire an MMT file from a distributing server 50; however, there is no limitation to this configuration, but rather so long as the template file editing apparatus has an editing function and can acquire an MMT file by some means, the template file editing apparatus does not necessarily need to have a communication function.

Furthermore, it may be configured such that the MMT file producing function of the template creating apparatus 10 is incorporated into the communication terminal apparatus 20. In this case, it may be configured such that the editing operation setting data in a produced MMT file is also made to be editable, whereby it is possible to modify the editing operation setting data, and then incorporate the modified editing operation setting data back into the original MMT file, thus producing a new MMT file, which can then be outputted.

It is to be understood that the object of the present invention may also be attained by supplying a system or apparatus with a storage medium storing program code of a software program which realizes the functions of the above described embodiment of the present invention, and causing a computer (or CPU, MPU) of the system or apparatus to read out and execute the program code stored in the storage medium.

In this case, the program code itself read out from the storage medium realizes the functions of the embodiment of the present invention, and thus the storage medium storing the program code constitutes the present invention. Examples of the storage medium for supplying the program code include a ROM, a floppy (registered trademark) disk, a hard disk, an optical disk, a magnetic-optical disk, a CD-ROM, a CD-R/RW, a DVD-ROM, a DVD-RAM, a DVD-R/RW, a DVD+RW, a magnetic tape, and a nonvolatile memory card. Moreover, the program code may be downloaded via a network or the like.

Moreover, it is to be understood that the functions of the above described embodiment of the present invention can be realized not only by causing a computer to execute the program code read out, but also by causing an operating system or the like running on the computer to perform part or all of the actual operations based on instructions of the program code.

Furthermore, it is to be understood that the functions of the above described embodiment may also be realized by writing the program code read out from the storage medium into an expansion board inserted into a computer or a memory provided in an expansion unit connected to the computer and then causing a CPU or the like provided in the expansion board or the expansion unit to perform a part or all of the actual operations based on instructions of the program code.

Moreover, in the above described embodiment of the present invention, it is arranged such that the MMT file editing process of FIG. 6 (or FIGS. 9A to 9C) is carried out by the communication terminal apparatus 20, but it may be configured such that such MMT file editing process is carried out by the distributing server 50 in accordance with commands from the communication terminal apparatus 20. In this case, it should be configured such that an MMT file editing process program is stored on the distributing server 50 in advance via communication or a storage medium, and then the distributing server 50 proceeds with the MMT file editing process while receiving commands from the communication terminal apparatus 20. For example, with regard to the processing corresponding to steps S604, S606, S608 and S609 in FIG. 6, control should be carried out such that the distributing server 50 sends requests for command input to the communication terminal apparatus 20, and then the communication terminal apparatus 20 transmits the inputted commands to the distributing server 50. Then, after the distributing server 50 has completed the MMT file editing process, the distributing server 50 should transmit the edited MMT file to the communication terminal apparatus 20. Note that preview on the communication terminal apparatus 20 during editing is also possible.

Furthermore, similarly, it may be configured such that the distributing server 50 is made to have the MMT file producing function of the template creating apparatus 10. In this case, an MMT file producing process program should be stored on the distributing server 50 via communication or a storage medium, and then executed by the distributing server 50.

Moreover, in the above described embodiment, it is arranged such that the template creating apparatus 10 and the communication terminal apparatus 20 each carry out sending and receiving of various data via the communication line 40, but this sending and receiving of data may instead be carried out via a storage medium such as a flash memory or a magnetic recording medium.

## Claims

1. A computer-readable storage medium storing a multi-media template file, the multi-media template file comprising:
multi-media data comprising at least one type of media data that can be reproduced, and sequence data that determines reproduction timing and a reproduction form for each piece of said media data; and
editing operation setting data that is made to correspond piece by piece to the multi-media data,
wherein each piece of said editing operation setting data determines whether or not editing can be carried out and permitted forms of editing for a corresponding piece of said multi-media data.

2. A storage medium as claimed in claim 1, wherein said editing operation setting data determines media data to be changed and ways in which the media data to be changed can be changed.

3. A storage medium as claimed in claim 1, wherein said editing operation setting data determines media data to be changed, by permitting changing of said sequence data, and permits changing of at least one of the reproduction timing and the reproduction form for the media data to be changed.

4. A storage medium as claimed in claim 1, wherein said media data comprises a plurality of pieces of media data that are determined by said sequence data to be selectively reproduced in specific reproduction timing, and said editing operation setting data permits selection of a piece of media data to be actually reproduced in the specific reproduction timing out of the plurality of pieces of media data.

5. A storage medium as claimed in claim 1, wherein said editing operation setting data permits a piece of alternative media data that is subsequently acquired to be assigned as a piece of said media data to be reproduced in specific reproduction timing determined by said sequence data.

6. A storage medium as claimed in claim 1, wherein said editing operation setting data permits selection of whether or not a piece of said media data to be reproduced in specific reproduction timing determined by said sequence data is to be actually reproduced in the specific reproduction timing.

7. A template file creating apparatus comprising:
a multi-media data acquiring device that acquires multi-media data comprising at least one type of media data that can be reproduced, and sequence data that determines reproduction timing and a reproduction form for each piece of the media data;
a setting data creating device that creates editing operation setting data that determines whether or not editing can be carried out and permitted forms of editing for each piece of the multi-media data acquired by said multi-media data acquiring device; and
a template file producing device that produces a multi-media template file comprising the acquired multi-media data and the editing operation setting data created by said setting data creating device, wherein the multi-media data and the editing operation setting data are made to correspond piece by piece to one another.

8. A template file editing apparatus comprising:
a template file acquiring device that acquires a multi-media template file comprising multi-media data, and editing operation setting data that determines whether or not editing can be carried out and permitted forms of editing for each piece of the multi-media data, the multi-media data and the editing operation setting data being made to correspond piece by piece to one another, and wherein the multi-media data comprises at least one type of media data that can be reproduced, and sequence data that determines reproduction timing and a reproduction form for each piece of the media data;
a presenting device that presents editable contents information that indicates editable contents with regard to the multi-media data in the multi-media template file acquired by said template file acquiring device, in accordance with the editing operation setting data in the acquired multi-media template file;
an editing operation receiving device that receives editing operations for the multi-media data, in accordance with the editable contents information presented by said presenting device; and
a data modifying device that modifies the multi-media data in accordance with the editing operations received by said editing operation receiving device, within a scope permitted by the editing operation setting data.

9. A template file editing apparatus as claimed in claim 8, wherein said presenting device presents the editable contents information in an order according to the reproduction timing determined by the sequence data, and said editing operation receiving device receives the editing operations in the order of the presentation of the editable contents information by said presenting device.

10. A template file editing apparatus as claimed in claim 8, wherein the sequence data has corresponding thereto numerical information that determines an order, said presenting device presents the editable contents information in the order determined by the numerical information, and said editing operation receiving device receives the editing operations in the order of the presentation of the editable contents information by said presenting device.

11. A template file editing apparatus as claimed in claim 8, wherein said presenting device displays a list corresponding to the editable contents information, receives editing-targeted editable contents information using the displayed list, and displays the received editing-targeted editable contents information, and said editing operation receiving device receives the editing operations in accordance with the displayed editing-targeted editable contents information.

12. A template file editing apparatus as claimed in claim 8, further comprising a reproduction device that reproduces the media data in the multi-media template file in the reproduction timing determined by the sequence data, when the editable contents information is presented by said presenting device, and wherein:
when the reproduction timing for a piece of the media data for which editing is permitted is reached, said presenting device presents the editable contents information relating to the piece of the media data for which editing is permitted and said reproduction device suspends the reproduction of the media data;
said editing operation receiving device receives the editing operations in an order of the presentation of the editable contents information by said presenting device, said data modifying device carries out modification of the multi-media data in an order of the reception of the editing operations by said editing operation receiving device; and
after the modification has been carried out by said data modifying device, said reproduction device restarts the suspended reproduction of the media data.

13. A template file editing apparatus as claimed in claim 8, further comprising a presentation changing device which, when a plurality of pieces of editable contents information are presented in different timing to one another by said presenting device, changes presentation contents from a currently presented piece of editable contents information to another piece of editable contents information in accordance with a user's instruction.

14. A template file editing apparatus as claimed in claim 8, wherein a form of presentation of the editable contents information by said presenting device can be selected from a plurality of preset forms.

15. A template file editing apparatus as claimed in claim 8, wherein the multi-media template file includes a plurality of pieces of media data that are to be selectively reproduced in specific reproduction timing determined by the sequence data, and said data modifying device modifies the multi-media data by selecting a piece of media data to be actually reproduced in the specific reproduction timing from the plurality of pieces of media data.

16. A template file editing apparatus as claimed in claim 8, further comprising an alternative media data acquiring device that acquires alternative media data, and wherein said data modifying device modifies the multi-media data by assigning a piece of the alternative media data acquired by said alternative media data acquiring device as a piece of the media data to be reproduced in specific reproduction timing determined by the sequence data.

17. A template file editing apparatus as claimed in claim 8, wherein said data modifying device modifies the multi-media data by selecting, for a piece of media data to be reproduced in specific reproduction timing determined by the sequence data, whether or not to actually reproduce the piece of media data in the specific reproduction timing.

18. A template file distributing server connected to at least one terminal apparatus for communication therewith, comprising:
a data distributing device that distributes, to the terminal apparatus, a multi-media template file comprising multi-media data, and editing operation setting data that determines whether or not editing can be carried out and permitted forms of editing for each piece of the multi-media data, the multi-media data and the editing operation setting data being made to correspond piece by piece to one another, wherein the multi-media data comprises at least one type of media data that can be reproduced, and sequence data that determines reproduction timing and a reproduction form for each piece of the media data.

19. A template file distributing system comprising:
a template file distributing server; and
a template file editing apparatus connected to said template file distributing server for communication therewith;
wherein said template file distributing server comprises a data distributing device that distributes, to said template file editing apparatus, a multi-media template file comprising multi-media data, and editing operation setting data that determines whether or not editing can be carried out and permitted forms of editing for each piece of the multi-media data, the multi-media data and the editing operation setting data being made to correspond piece by piece to one another, and wherein the multi-media data comprises at least one type of media data that can be reproduced, and sequence data that determines reproduction timing and a reproduction form for each piece of the media data;
and wherein said template file editing apparatus comprises:
a template file acquiring device that acquires a multi-media template file by receiving the multi-media template file distributed by said data distributing device of said template file distributing server;
a presenting device that presents editable contents information that indicates editable contents with regard to the multi-media data in the multi-media template file acquired by said template file acquiring device, in accordance with the editing operation setting data in the multi-media template file;
an editing operation receiving device that receives editing operations for the multi-media data, in accordance with the contents presented by said presenting device; and
a data modifying device that modifies the multi-media data in accordance with the editing operations received by said editing operation receiving device, within a scope permitted by the editing operation setting data.

20. A template file creating program executed by a computer, comprising:
a multi-media data acquiring module for acquiring multi-media data comprising at least one type of media data that can be reproduced, and sequence data that determines reproduction timing and a reproduction form for each piece of the media data;
a setting data creating module for creating editing operation setting data that determines whether or not editing can be carried out and permitted forms of editing for each piece of the multi-media data acquired by said multi-media data acquiring module; and
a template file producing module for producing a multi-media template file comprising the acquired multi-media data and the editing operation setting data created by said setting data creating module, the multi-media data and the editing operation setting data being made to correspond piece by piece to one another.

21. A template file editing program executed by a computer, comprising:
a template file acquiring module for acquiring a multi-media template file comprising multi-media data, and editing operation setting data that determines whether or not editing can be carried out and permitted forms of editing for each piece of the multi-media data, the multi-media data and the editing operation setting data being made to correspond piece by piece to one another, and wherein the multi-media data comprises at least one type of media data that can be reproduced, and sequence data that determines reproduction timing and a reproduction form for each piece of the media data;
a presenting module for presenting editable contents information that indicates editable contents with regard to the multi-media data in the multi-media template file acquired by said template file acquiring module, in accordance with the editing operation setting data in the multi-media template file;
an editing operation receiving module for receiving editing operations for the multi-media data, in accordance with the editable contents information presented by said presenting module; and
a data modifying module for modifying the multi-media data in accordance with the editing operations received by said editing operation receiving module, within a scope permitted by the editing operation setting data.
